# EUROPEAN PATENT SPECIFICATION

(11) **EP 4 408 203 B1**
(45) Date of publication and mention of the grant of the patent: **06.05.2026**
(21) Application number: 22786409.7
(22) Date of filing: 30.09.2022
(51) Int. Cl.: A24C 5/36

(54) **A SUBSTANCE RECOVERY APPARATUS**
VORRICHTUNG ZUR RÜCKGEWINNUNG VON SUBSTANZEN
APPAREIL DE RÉCUPÉRATION DE SUBSTANCE

(30) Priority: 01.10.2021 GB 202114109
(43) Date of publication of application: 07.08.2024
(73) Proprietor: British American Tobacco (Investments) Limited, London WC2R 3LA (GB)
(72) Inventor: PARK, Jeong Hwan, London WC2R 3LA (GB); LEE, Jong Myung, Sacheon-si Gyeongsangnam-do 52530 (KR); KIM, Sungduck, Sacheon-si Gyeongsangnam-do 52530 (KR); JANG, Kyung Soo Jang, Sacheon-si Gyeongsangnam-do 52530 (KR); WONG, Wong Kwee Cheong, London WC2R 3LA (GB)
(74) Representative: Rogan, Jack William
(86) International application number: PCT/GB2022/052491
(87) International publication number: WO 2023/052791

(56) References cited:
- WO-A1-2014/135913
- WO-A1-2014/155327
- GB-A- 2 494 159
- IT-A1- VE20 120 008
- US-A- 4 117 852

## Description

### Technical Field of the Invention

The present invention relates to an apparatus for recovering a substance from a rejected delivery system, such as those that deliver a substance to a user.

### Background of the Invention

It is known to discard a delivery system from a production line of a delivery system assembly machine if the delivery system is faulty in some way. In some instances, the faulty delivery systems are collected and the filter portions separated from the substance portions. However, it is difficult to separate the substance from the wrapper and so machines designed to carry out this task are often complex. In other instances, the substance in the faulty delivery system is often discarded creating waste.

US4117852 discloses an apparatus for reclaiming tobacco and paper from cigarettes.

The apparatus comprises a drum for receiving cigarettes, an air jetting means for ejecting tobacco from the surrounding paper tube, and a belt for holding the cigarette against the drum during the jetting process.

### Summary of the Invention

According to an embodiment of the present invention, there is provided an apparatus for recovering a substance from rejected delivery systems as defined in appended claim 1. The apparatus comprises a transport system configured to receive a rejected delivery system and convey it along a conveyance path in a direction perpendicular to a longitudinal axis of a rejected delivery system, the transport system comprising at least one transport member; a retainer comprising an endless flexible belt configured to engage a rejected delivery system received on the transport system over a portion of the conveyance path as a rejected delivery system travels along the conveyance path and to retain a rejected delivery system on the transport system; and a fluid conduit configured to direct a jet of gas into a first end of a rejected delivery system from an opposite end of a rejected delivery system, whilst a rejected delivery system is transported along said portion of the conveyance path and retained on the transport system by the retainer.

According to the invention, the transport system comprises first and second transport members, and the fluid conduit may comprise a first fluid conduit configured to direct a jet of gas into a rejected delivery system on the first transport member and a second fluid conduit configured to direct a jet of gas into a rejected delivery system on the second transport member.

The first and second fluid conduits are on opposing sides of the first and second transport members such that a rejected delivery system orientated with its first end in a first direction is subjected to a jet of gas from the first fluid conduit on the first transport member and a rejected delivery system orientated with its first end in an opposing second direction is subjected to a jet of gas from the second fluid conduit on the second transport member.

In some embodiments, the transport system may further comprise an intermediate transport member located between the first and second transport members, the intermediate transport member may be configured to transfer a rejected delivery system orientated with its first end in an opposing second direction from the first transport member to the second transport member.

In some embodiments, a transfer point between the intermediate transport member and the first transport member may be located upstream of the first fluid conduit.

In some embodiments, the apparatus may further comprise a sensor configured to determine the orientation of a rejected delivery system, and a controller configured to transfer a rejected delivery system to the second transport member when a rejected delivery system is orientated with its first end in an opposing second direction.

In some embodiments, the retainer may comprise a first endless flexible belt configured to engage a rejected delivery system on the first transport member over a first portion of the conveyance path, and a second endless flexible belt configured to engage a rejected delivery system on the second transport member over a second portion of the conveyance path.

In some embodiments, the retainer may comprise an endless flexible belt configured to engage a rejected delivery system on the first transport member over a first portion of the conveyance path and on the second transport member over a second portion of the conveyance path.

In some embodiments, at least one transport member may comprise a plurality of recesses, each recess spaced from adjacent recesses and extending parallel to one another, wherein each recess is configured to receive a rejected delivery system for conveyance along the conveyance path.

In some embodiments, at least one endless flexible belt may be configured to retain a rejected delivery system in at least one of the plurality of recesses.

In some embodiments, at least one endless flexible belt may be configured to rotate in a direction opposite to the transport member that the at least one endless flexible belt contacts, such that the at least one endless flexible belt and the transport member it is in contact with move in the same direction over at least one of said first and second portions of the conveyance path.

In some embodiments, at least one endless flexible belt and the at least one transport member in which the at least one endless flexible belt is in contact with may be configured to move at the same speed over at least one of said first and second portions of the conveyance path.

In some embodiments, a section of at least one of the endless flexible belts may contact at least one transport member to at least partially compress a rejected delivery system into its respective recess on the at least one transport member as the at least one endless flexible belt and the at least one transport member are moved.

In some embodiments, the at least one endless flexible belt may be formed from a resiliently deformable material, said section of the at least one endless flexible belt in contact with at least one transport member may be configured to deform to assume the contour of a section of the at least one transport member that the at least one endless flexible belt is in contact with and retain a rejected delivery system in its respective recess.

In some embodiments, each one of the plurality of recesses may have a first end that is open to a first edge of at least one transport member and a second end that is open to a second edge of the at least one transport member, and wherein the apparatus may comprise at least one end plate positioned against the at least one transport member to close the first or second end of the recesses along a portion of the conveyance path.

In some embodiments, a first end of the recesses on the first transport member may be closed by a first end plate along said first portion of the conveyance path, and wherein the first fluid conduit may comprise a first hole extending through the first end plate, the first hole being positioned to be in sequential fluid communication with each recess as the first transport member moves to convey a rejected delivery system along the conveyance path.

In some embodiments, the first hole may be configured to sequentially communicate a jet of gas with each recess as the first transport member moves to convey a rejected delivery system along the conveyance path, such that a jet of gas is directed into the first end of a rejected delivery system received in the recess.

In some embodiments, the first fluid conduit may comprise a first nozzle connected to the first hole.

In some embodiments, a second end of the recesses on the second transport member may be closed by a second end plate along said second portion of the conveyance path, and wherein the second fluid conduit may comprise a second hole extending through the second end plate, the second hole being positioned to be in sequential fluid communication with each recess as the second transport member moves to convey a rejected delivery system along the conveyance path.

In some embodiments, the second fluid conduit may comprise a second nozzle connected to the second hole.

In some embodiments, the apparatus may further comprise a vacuum arrangement comprising a suction hole extending through the end plate and positioned to sequentially communicate with each recess as the at least one transport member moves to covey a rejected delivery system along the conveyance path, prior to reaching the fluid conduit and engagement of a rejected delivery system on the transport member by the endless flexible belt, to pull a rejected delivery system in a longitudinal direction such that the first end of a rejected delivery system is positioned against the end plate.

In some embodiments, the transport member may be a cylindrical drum, and a rejected delivery system received on the transport member follows an arcuate path as it is conveyed along the conveyance path on the cylindrical drum.

In some embodiments, a collector may be positioned adjacent to the transport member to collect a substance expelled from a rejected delivery system.

In some embodiments, the collector may be configured to collect an expelled substance under suction.

In some embodiments, the collector may comprise a funnel connected to a conduit and a suction pump to draw an expelled substance into the funnel and along the conduit.

In some embodiments, the conduit may transport an expelled substance into a sorting section configured to separate an expelled substance from contaminants.

In some embodiments, the collector may comprise a first collector positioned on a second end of the first transport member and a second collector positioned on a first side of the second transport member.

In some embodiments, the first and second collectors may both feed an expelled substance into the same sorting section.

In some embodiments, the apparatus may further comprise a hopper configured to receive a rejected delivery system and feed a rejected delivery systems onto the transport member.

In some embodiments, the apparatus may further comprise a rotary feeder configured to receive a rejected delivery system from a rejected delivery system conveyor and feed a rejected delivery system to the hopper.

In some embodiments, a rejected delivery system may be drawn into each recess in the transport member under vacuum.

In some embodiments, a rejected delivery system may be retained in a recess by both vacuum and the endless flexible belt.

In another aspect of the present disclosure, there is provided an apparatus for recovering a substance from rejected delivery systems. The apparatus comprises a transport system configured to receive a rejected delivery system and convey it along a conveyance path in a direction perpendicular to a longitudinal axis of a rejected delivery system, wherein the transport system comprises at least one transport member, the at least one transport member being at least one rotary drum; a fluid conduit configured to direct a jet of gas into a first end of a rejected delivery system from an opposite end of a rejected delivery system, whilst a rejected delivery system is transported along said portion of the conveyance path.

In some embodiments, the transport system may comprise first and second transport drums, and the fluid conduit comprises a first fluid conduit configured to direct a jet of gas into a rejected delivery system on the first transport drum and a second fluid conduit configured to direct a jet of gas into a rejected delivery system on the second transport drum.

In some embodiments, the first and second fluid conduits may be on opposing sides of the first and second transport drums such that a rejected delivery system orientated with its first end in a first direction is subjected to a jet of gas from the first fluid conduit on the first transport drum and a rejected delivery system orientated with its first end in an opposing second direction is subjected to a jet of gas from the second fluid conduit on the second transport drum.

In some embodiments, the transport system may further comprise an intermediate transport drum located between the first and second transport drums, the intermediate transport drum being configured to transfer a rejected delivery system orientated with its first end in an opposing second direction from the first transport drum to the second transport drum.

In some embodiments, the intermediate transport drum may be located upstream of the first fluid conduit.

In some embodiments, the apparatus may further comprise a sensor configured to determine the orientation of a rejected delivery system, and a controller configured to transfer a rejected delivery system to the second transport drum when a rejected delivery system is orientated with its first end in an opposing second direction.

In some embodiments, at least one transport drum may comprise a plurality of recesses, each recess spaced from adjacent recesses and extending parallel to one another, wherein each recess is configured to receive a rejected delivery system for conveyance along the conveyance path.

In some embodiments, at least one endless flexible belt may be configured to retain a rejected delivery system in at least one of the plurality of recesses.

In another aspect of the present invention, there is provided a delivery system manufacturing system including an inspection station and a rejection path for delivery systems rejected by the inspection station, and the apparatus according to any one of claim 1 to claim 13 positioned to receive rejected delivery systems conveyed along the rejection path.

In another aspect of the present invention, there is provided a method of extracting a substance from a rejected delivery system as defined in appended claim 15.

In some embodiments, the method may further comprise the steps of: pulling the rejected delivery system on the first and/or second transport member in a longitudinal direction so that the rejected delivery system is positioned with its first end against a first and/or second end plate in which the fluid conduit is located.

In some embodiments, pulling a rejected delivery system may comprise communicating a vacuum means with each recess as the first and/or second transport member moves to convey the rejected delivery system along the conveyance path, prior to reaching the first and/or second fluid conduit and engagement of the rejected delivery system on the transport member by the endless flexible belt.

### Brief Description of the Drawings

So that the invention may be more fully understood, embodiments of the present invention will now be described, by way of example only, with reference to the accompanying drawings, in which:
Fig. 1 shows a schematic perspective view of an apparatus;
Fig. 2 shows a schematic side view of the apparatus of Fig. 1;
Fig. 3 shows a schematic perspective view of a part of the apparatus of Fig. 1;
Fig. 4 shows a schematic side view of a transport system of the apparatus of Fig. 1;
Fig. 5 shows a schematic front view of the transport system of Fig. 4;
Fig. 6 shows a schematic perspective view of the transport system and retainer of the apparatus of Fig. 1;
Fig. 7 shows a schematic enlarged side view of the transport system, retainer, and a fluid conduit of the apparatus of Fig. 1;
Fig. 8 shows a schematic perspective view of the transport system of the apparatus of Fig. 1;
Fig. 9 shows a schematic perspective view of an apparatus;
Fig. 10 shows a schematic side view of transport system of the apparatus of Fig. 9;
Fig. 11 shows a schematic perspective front view of a transport system of Fig. 9;
Fig. 12 shows a schematic perspective rear view of a transport system of Fig. 9; and
Fig. 13 shows a schematic perspective view of a conveyor and a feeder of the apparatus of Fig. 9.

### Detailed Description of the Invention

As used herein, the term "delivery system" is intended to encompass systems that deliver at least one substance to a user, and includes:
combustible aerosol provision systems, such as cigarettes, cigarillos, cigars, and tobacco for pipes or for roll-your-own or for make-your-own cigarettes (whether based on tobacco, tobacco derivatives, expanded tobacco, reconstituted tobacco, tobacco substitutes or other smokable material); and
non-combustible aerosol provision systems that release compounds from an aerosol-generating material without combusting the aerosol-generating material, such as electronic cigarettes, tobacco heating products, and hybrid systems to generate aerosol using a combination of aerosol-generating materials.

According to the present disclosure, a "combustible" aerosol provision system is one where a constituent aerosol-generating material of the aerosol provision system (or component thereof) is combusted or burned during use in order to facilitate delivery of at least one substance to a user.

In some embodiments, the delivery system is a combustible aerosol provision system, such as a system selected from the group consisting of a cigarette, a cigarillo and a cigar.

In some embodiments, the disclosure relates to a component for use in a combustible aerosol provision system, such as a filter, a filter rod, a filter segment, a tobacco rod, a spill, an aerosol-modifying agent release component such as a capsule, a thread, or a bead, or a paper such as a plug wrap, a tipping paper or a cigarette paper.

According to the present disclosure, a "non-combustible" aerosol provision system is one where a constituent aerosol-generating material of the aerosol provision system (or component thereof) is not combusted or burned in order to facilitate delivery of at least one substance to a user.

In some embodiments, the delivery system is a non-combustible aerosol provision system, such as a powered non-combustible aerosol provision system.

In some embodiments, the non-combustible aerosol provision system is an electronic cigarette, also known as a vaping device or electronic nicotine delivery system (END), although it is noted that the presence of nicotine in the aerosol-generating material is not a requirement.

In some embodiments, the non-combustible aerosol provision system is an aerosol-generating material heating system, also known as a heat-not-burn system. An example of such a system is a tobacco heating system.

In some embodiments, the non-combustible aerosol provision system is a hybrid system to generate aerosol using a combination of aerosol-generating materials, one or a plurality of which may be heated. Each of the aerosol-generating materials may be, for example, in the form of a solid, liquid or gel and may or may not contain nicotine. In some embodiments, the hybrid system comprises a liquid or gel aerosol-generating material and a solid aerosol-generating material. The solid aerosol-generating material may comprise, for example, tobacco or a non-tobacco product.

Typically, the non-combustible aerosol provision system may comprise a non-combustible aerosol provision device and a consumable for use with the non-combustible aerosol provision device.

In some embodiments, the disclosure relates to consumables comprising aerosol-generating material and configured to be used with non-combustible aerosol provision devices. These consumables are sometimes referred to as articles throughout the disclosure.

In some embodiments, the non-combustible aerosol provision system, such as a non-combustible aerosol provision device may comprise a power source and a controller. The power source may, for example, be an electric power source or an exothermic power source. In some embodiments, the exothermic power source comprises a carbon substrate which may be energised so as to distribute power in the form of heat to an aerosol-generating material or to a heat transfer material in proximity to the exothermic power source.

In some embodiments, the non-combustible aerosol provision system may comprise an area for receiving the consumable, an aerosol generator, an aerosol generation area, a housing, a mouthpiece, a filter and/or an aerosol-modifying agent.

In some embodiments, the consumable for use with the non-combustible aerosol provision device may comprise aerosol-generating material, an aerosol-generating material storage area, an aerosol-generating material transfer component, an aerosol generator, an aerosol generation area, a housing, a wrapper, a filter, a mouthpiece, and/or an aerosol-modifying agent.

In some embodiments, the substance to be delivered may be an aerosol-generating material or a material that is not intended to be aerosolised. As appropriate, either material may comprise one or more active constituents, one or more flavours, one or more aerosol-former materials, and/or one or more other functional materials.

In some embodiments, the substance to be delivered comprises an active substance.

The active substance as used herein may be a physiologically active material, which is a material intended to achieve or enhance a physiological response. The active substance may for example be selected from nutraceuticals, nootropics, psychoactives. The active substance may be naturally occurring or synthetically obtained. The active substance may comprise for example nicotine, caffeine, taurine, theine, vitamins such as B6 or B12 or C, melatonin, cannabinoids, or constituents, derivatives, or combinations thereof. The active substance may comprise one or more constituents, derivatives or extracts of tobacco, cannabis or another botanical.

In some embodiments, the active substance comprises nicotine. In some embodiments, the active substance comprises caffeine, melatonin or vitamin B12.

As noted herein, the active substance may comprise one or more constituents, derivatives or extracts of cannabis, such as one or more cannabinoids or terpenes.

As noted herein, the active substance may comprise or be derived from one or more botanicals or constituents, derivatives or extracts thereof. As used herein, the term "botanical" includes any material derived from plants including, but not limited to, extracts, leaves, bark, fibres, stems, roots, seeds, flowers, fruits, pollen, husk, shells or the like. Alternatively, the material may comprise an active compound naturally existing in a botanical, obtained synthetically. The material may be in the form of liquid, gas, solid, powder, dust, crushed particles, granules, pellets, shreds, strips, sheets, or the like. Example botanicals are tobacco, eucalyptus, star anise, hemp, cocoa, cannabis, fennel, lemongrass, peppermint, spearmint, rooibos, chamomile, flax, ginger, ginkgo biloba, hazel, hibiscus, laurel, licorice (liquorice), matcha, mate, orange skin, papaya, rose, sage, tea such as green tea or black tea, thyme, clove, cinnamon, coffee, aniseed (anise), basil, bay leaves, cardamom, coriander, cumin, nutmeg, oregano, paprika, rosemary, saffron, lavender, lemon peel, mint, juniper, elderflower, vanilla, wintergreen, beefsteak plant, curcuma, turmeric, sandalwood, cilantro, bergamot, orange blossom, myrtle, cassis, valerian, pimento, mace, damien, marjoram, olive, lemon balm, lemon basil, chive, carvi, verbena, tarragon, geranium, mulberry, ginseng, theanine, theacrine, maca, ashwagandha, damiana, guarana, chlorophyll, baobab or any combination thereof. The mint may be chosen from the following mint varieties: Mentha Arventis, Mentha c.v.,Mentha niliaca, Mentha piperita, Mentha piperita citrata c.v.,Mentha piperita c.v, Mentha spicata crispa, Mentha cardifolia, Memtha longifolia, Mentha suaveolens variegata, Mentha pulegium, Mentha spicata c.v. and Mentha suaveolens

In some embodiments, the active substance comprises or is derived from one or more botanicals or constituents, derivatives or extracts thereof and the botanical is tobacco.

In some embodiments, the active substance comprises or derived from one or more botanicals or constituents, derivatives or extracts thereof and the botanical is selected from eucalyptus, star anise, cocoa and hemp.

In some embodiments, the active substance comprises or derived from one or more botanicals or constituents, derivatives or extracts thereof and the botanical is selected from rooibos and fennel.

In some embodiments, the substance to be delivered comprises a flavour.

As used herein, the terms "flavour" and "flavourant" refer to materials which, where local regulations permit, may be used to create a desired taste, aroma or other somatosensorial sensation in a product for adult consumers. They may include naturally occurring flavour materials, botanicals, extracts of botanicals, synthetically obtained materials, or combinations thereof (e.g., tobacco, cannabis, licorice (liquorice), hydrangea, eugenol, Japanese white bark magnolia leaf, chamomile, fenugreek, clove, maple, matcha, menthol, Japanese mint, aniseed (anise), cinnamon, turmeric, Indian spices, Asian spices, herb, wintergreen, cherry, berry, red berry, cranberry, peach, apple, orange, mango, clementine, lemon, lime, tropical fruit, papaya, rhubarb, grape, durian, dragon fruit, cucumber, blueberry, mulberry, citrus fruits, Drambuie, bourbon, scotch, whiskey, gin, tequila, rum, spearmint, peppermint, lavender, aloe vera, cardamom, celery, cascarilla, nutmeg, sandalwood, bergamot, geranium, khat, naswar, betel, shisha, pine, honey essence, rose oil, vanilla, lemon oil, orange oil, orange blossom, cherry blossom, cassia, caraway, cognac, jasmine, ylang-ylang, sage, fennel, wasabi, piment, ginger, coriander, coffee, hemp, a mint oil from any species of the genus Mentha, eucalyptus, star anise, cocoa, lemongrass, rooibos, flax, ginkgo biloba, hazel, hibiscus, laurel, mate, orange skin, rose, tea such as green tea or black tea, thyme, juniper, elderflower, basil, bay leaves, cumin, oregano, paprika, rosemary, saffron, lemon peel, mint, beefsteak plant, curcuma, cilantro, myrtle, cassis, valerian, pimento, mace, damien, marjoram, olive, lemon balm, lemon basil, chive, carvi, verbena, tarragon, limonene, thymol, camphene), flavour enhancers, bitterness receptor site blockers, sensorial receptor site activators or stimulators, sugars and/or sugar substitutes (e.g., sucralose, acesulfame potassium, aspartame, saccharine, cyclamates, lactose, sucrose, glucose, fructose, sorbitol, or mannitol), and other additives such as charcoal, chlorophyll, minerals, botanicals, or breath freshening agents. They may be imitation, synthetic or natural ingredients or blends thereof. They may be in any suitable form, for example, liquid such as an oil, solid such as a powder, or gas.

In some embodiments, the flavour comprises menthol, spearmint and/or peppermint. In some embodiments, the flavour comprises flavour components of cucumber, blueberry, citrus fruits and/or redberry. In some embodiments, the flavour comprises eugenol. In some embodiments, the flavour comprises flavour components extracted from tobacco. In some embodiments, the flavour comprises flavour components extracted from cannabis.

In some embodiments, the flavour may comprise a sensate, which is intended to achieve a somatosensorial sensation which are usually chemically induced and perceived by the stimulation of the fifth cranial nerve (trigeminal nerve), in addition to or in place of aroma or taste nerves, and these may include agents providing heating, cooling, tingling, numbing effect. A suitable heat effect agent may be, but is not limited to, vanillyl ethyl ether and a suitable cooling agent may be, but not limited to eucolyptol, WS-3.

Aerosol-generating material is a material that is capable of generating aerosol, for example when heated, irradiated or energized in any other way. Aerosol-generating material may, for example, be in the form of a solid, liquid or semi-solid (such as a gel) which may or may not contain an active substance and/or flavourants.

The aerosol-generating material may comprise a binder and an aerosol former. Optionally, an active and/or filler may also be present. Optionally, a solvent, such as water, is also present and one or more other components of the aerosol-generating material may or may not be soluble in the solvent. In some embodiments, the aerosol-generating material is substantially free from botanical material. In particular, in some embodiments, the aerosol-generating material is substantially tobacco free.

The aerosol-generating material may comprise or be an "amorphous solid". The amorphous solid may be a "monolithic solid". In some embodiments, the amorphous solid may be a dried gel. The amorphous solid is a solid material that may retain some fluid, such as liquid, within it. In some embodiments, the aerosol-generating material may, for example, comprise from about 50wt%, 60wt% or 70wt% of amorphous solid, to about 90wt%, 95wt% or 100wt% of amorphous solid.

The aerosol-generating material may comprise or be an aerosol-generating film. The aerosol-generating film may be formed by combining a binder, such as a gelling agent, with a solvent, such as water, an aerosol-former and one or more other components, such as active substances, to form a slurry and then heating the slurry to volatilise at least some of the solvent to form the aerosol-generating film. The slurry may be heated to remove at least about 60 wt%, 70 wt%, 80 wt%, 85 wt% or 90 wt% of the solvent. The aerosol-generating film may be a continuous film or a discontinuous film, such an arrangement of discrete portions of film on a support. The aerosol-generating film may be substantially tobacco free.

The aerosol-generating film may comprise or be a sheet, which may optionally be shredded to form a shredded sheet.

The aerosol-generating material may comprise one or more active substances and/or flavours, one or more aerosol-former materials, and optionally one or more other functional material.

The aerosol-former material may comprise one or more constituents capable of forming an aerosol. In some embodiments, the aerosol-former material may comprise one or more of glycerol, propylene glycol, diethylene glycol, triethylene glycol, tetraethylene glycol, 1,3-butylene glycol, erythritol, meso-Erythritol, ethyl vanillate, ethyl laurate, a diethyl suberate, triethyl citrate, triacetin, a diacetin mixture, benzyl benzoate, benzyl phenyl acetate, tributyrin, lauryl acetate, lauric acid, myristic acid, and propylene carbonate.

The one or more other functional materials may comprise one or more of apH regulators, colouring agents, preservatives, binders, fillers, stabilizers, and/or antioxidants.

The material may be present on or in a support, to form a substrate. The support may, for example, be or comprise paper, card, paperboard, cardboard, reconstituted material, a plastics material, a ceramic material, a composite material, glass, a metal, or a metal alloy. In some embodiments, the support comprises a susceptor. In some embodiments, the susceptor is embedded within the material. In some alternative embodiments, the susceptor is on one or either side of the material.

A consumable is an article comprising or consisting of aerosol-generating material, part or all of which is intended to be consumed during use by a user. A consumable may comprise one or more other components, such as an aerosol-generating material storage area, an aerosol-generating material transfer component, an aerosol generation area, a housing, a wrapper, a mouthpiece, a filter and/or an aerosol-modifying agent. A consumable may also comprise an aerosol generator, such as a heater, that emits heat to cause the aerosol-generating material to generate aerosol in use. The heater may, for example, comprise combustible material, a material heatable by electrical conduction, or a susceptor.

An aerosol-modifying agent is a substance, typically located downstream of the aerosol generation area, that is configured to modify the aerosol generated, for example by changing the taste, flavour, acidity or another characteristic of the aerosol. The aerosol-modifying agent may be provided in an aerosol-modifying agent release component, that is operable to selectively release the aerosol-modifying agent

The aerosol-modifying agent may, for example, be an additive or a sorbent. The aerosol-modifying agent may, for example, comprise one or more of a flavourant, a colourant, water, and a carbon adsorbent. The aerosol-modifying agent may, for example, be a solid, a liquid, or a gel. The aerosol-modifying agent may be in powder, thread or granule form. The aerosol-modifying agent may be free from filtration material.

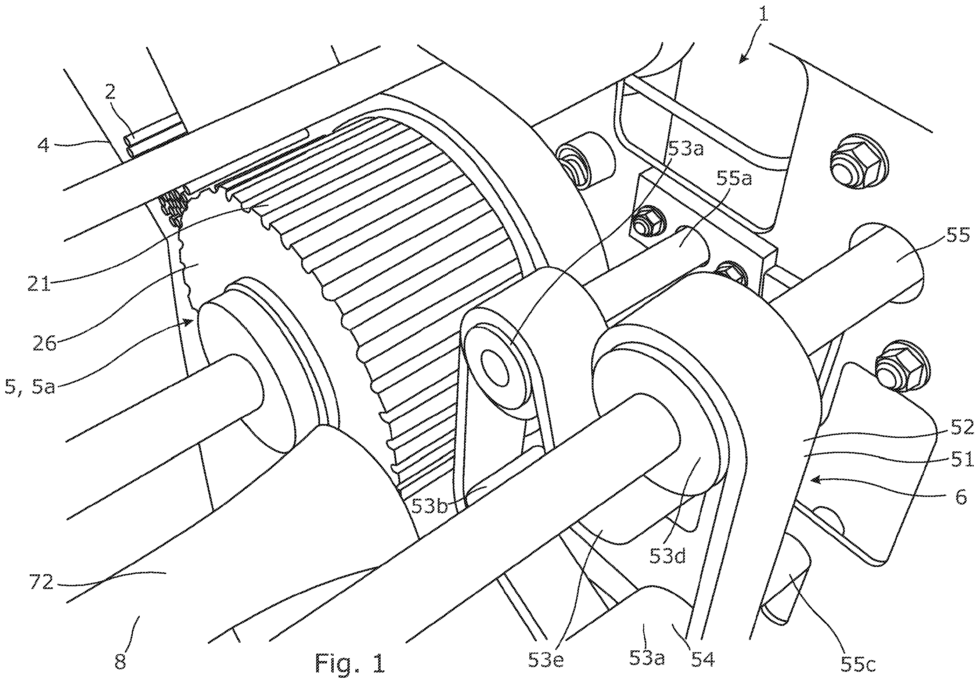

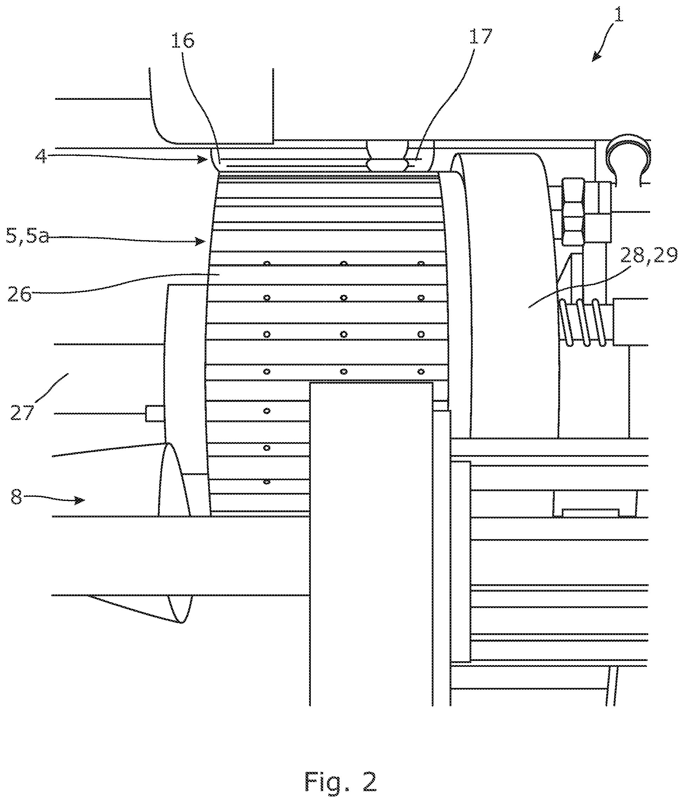

Referring now to Fig. 1 and Fig. 2, there is shown a perspective view of an apparatus 1 for recovering a substance from a rejected delivery system 2. It will be understood that the delivery system 2 may be a combustible aerosol provision system or part thereof, as described above, or a consumable for use with a non-combustible aerosol provision device forming a non-combustible aerosol provision system, as described above, etc.

The apparatus 1 may be a stand alone machine configured to receive batches of rejected delivery systems 2 and recover a substance in a container for reuse in another machine. Alternatively, the apparatus 1 may be a modular apparatus that can be connected to a delivery system manufacturing apparatus (not shown) and configured to receive rejected delivery systems 2 successively and recover a substance which is either collected in a container or directed back into an aerosol-generating material rod manufacturing device of a delivery system manufacturing apparatus.

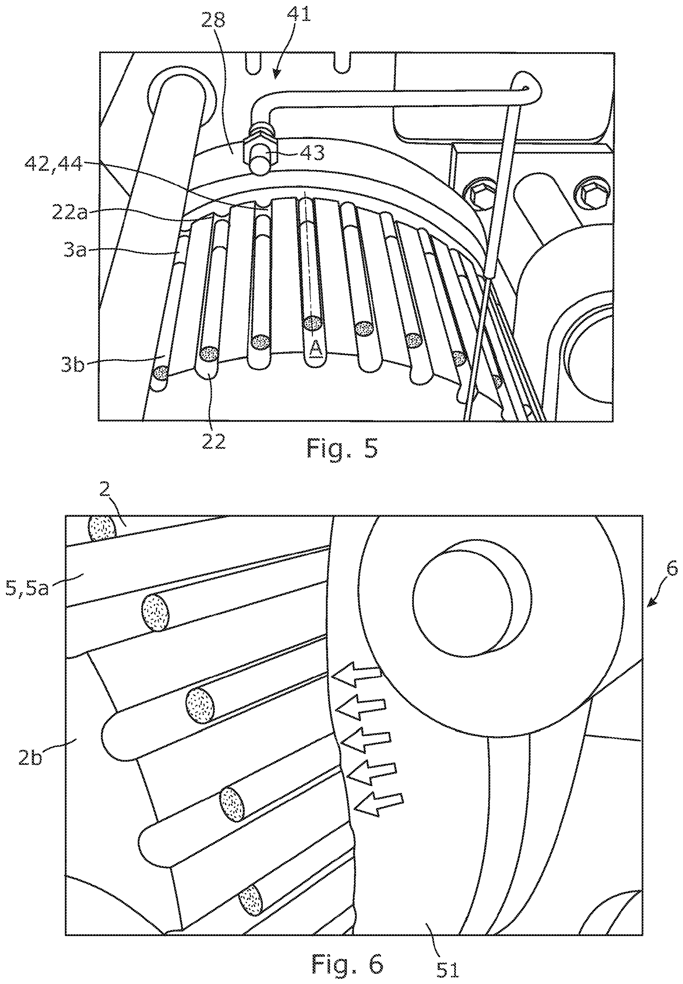

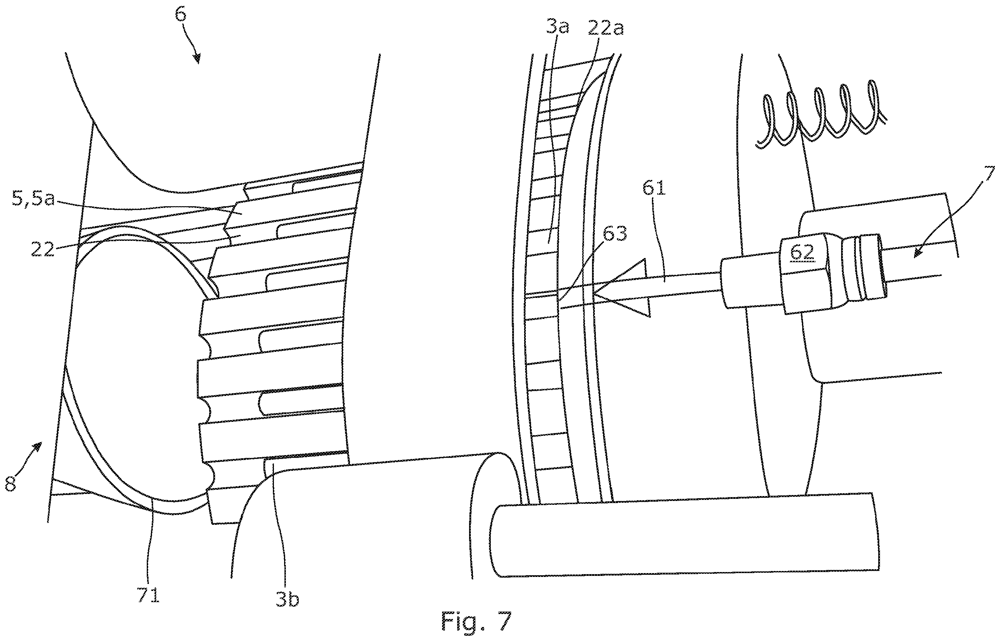

In the present embodiment, each delivery system 2 comprises a filter portion 3a and a substance portion 3b, shown in Fig. 5. The apparatus 1 comprises a hopper 4, a transport system 5, a retainer 6, a fluid conduit 7, shown in Fig. 7, and a collector 8. The apparatus 1 is configured to remove a substance from the substance portion 3b of the delivery system 2 and dispose of the filter portion 3a and substance portion 3b once the substance has been removed.

The transport system 5 is configured to receive a rejected delivery system 2 and convey the rejected delivery system 2 along a conveyance path in a conveyance direction. The conveyance direction is perpendicular to a longitudinal axis A of the rejected delivery system 2. The fluid conduit 7 is located adjacent to the conveyance path. The fluid conduit 7 is configured to direct a jet of gas into a first end of a delivery system 2 to expel a substance from an opposite end of the rejected delivery system 2, whilst the rejected delivery system 2 is retained on the transport system 5. The jet of gas may be, for example, but not limited to, a jet of air.

That is, in the present embodiment, the fluid conduit 7 is configured to direct a jet of gas into the filter portion 3a end of the rejected delivery system 2 to expel a substance from the substance portion 3b end, i.e. aerosol-generating material end, of the rejected delivery system 2, whilst the rejected delivery system 2 is retained on the transport system 5.

The retainer 6 is configured to engage a rejected delivery system 2 received on the transport system 5. The retainer 6 may extend along a portion of the conveyance path upstream and downstream of the fluid conduit 7. The transport system 5 and the retainer 6 are positioned such that the movement of the rejected delivery system 2 perpendicular to the conveyance direction is prohibited along the portion of the conveyance path. It will be appreciated that the jet of gas is of sufficient pressure to pass through the filter portion 3a, including any filtration material contained in the filter portion 3a, so that it will expel the substance on the opposite side of the filter portion 3a from the substance portion 3b.

The retainer 6 is configured to engage a rejected delivery system 2 received on the transport system 5 with sufficient force such that movement of the rejected delivery system 2 it's a direction parallel to the rejected delivery system's 2 longitudinal axis is prohibited even when the pressurised jet of gas is applied to the rejected delivery system 2.

However, it will be appreciated that in some embodiments, the retainer 6 will not be required. In such embodiments, the rejected delivery system 2 may be held in place using suction, as will be explained hereinafter.

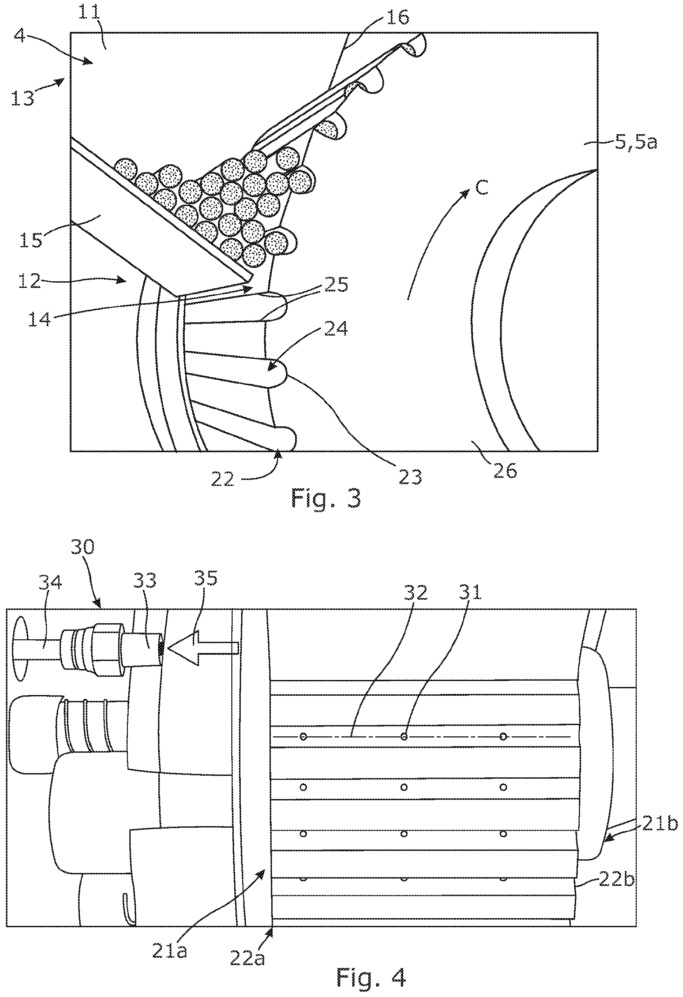

Referring to Fig. 3, an enlarged view of the hopper 4 and the transport system 5 is shown. The hopper 4 is configured to receive a rejected delivery system 2, which have been rejected by a delivery system manufacturing apparatus (not shown) after failing a quality check. The hopper 4 is configured to collect a rejected delivery system and feed the rejected delivery system 2 to the transport system 5. The apparatus 1 may further comprise sorting devices (not shown) configured to receive a rejected delivery system either directly or indirectly from a delivery system manufacturing apparatus and orientate the rejected delivery system to be received by the hopper 4. Exemplary sorting devices will be explained in more detail hereinafter.

In the present embodiment, the hopper 4 collects rejected delivery systems 2 that are all aligned in the same orientation. That is, the rejected delivery systems 2 are collected in the hopper 4 such that all the first ends, the filter portion 3a ends in the embodiment shown, are located on the same side of the hopper 4 and all the opposite ends, the substance portion 3b ends in the embodiment shown, are located on the opposite side of the hopper, as illustrated in Fig. 2 and Fig. 3.

The hopper 4 comprises an upper end 11 and a lower end 12. Proximate or at the upper end 11, the hopper 4 comprises an inlet 13 through which the rejected delivery systems 2 from the delivery system manufacturing apparatus (not shown) enter the hopper 4. The lower end of 12 of the hopper 4 comprises an outlet 14 through which the rejected delivery systems 2 exit the hopper 4 and are picked up by the transport system 5.

The hopper 4 further comprises an inclined wall 15, which extends substantially from the inlet 13 of the hopper 4 to the outlet 14 of the hopper 4. The inclined wall 15 is configured to guide the rejected delivery systems 2 from the inlet13 to the outlet 14. The inclined wall 15 of the hopper 4 allows the rejected delivery systems 2 to collect proximate the outlet 14 of the hopper 4. In the present embodiment, the lowest positioned rejected delivery system 2 at the lower end 12 of the hopper 4 passes out of the outlet 14 and is received by the transport system 5. The inclined wall 15 also ensures that as the rejected delivery systems 2 at the lower end 12 of the hopper 4 are transferred to the transport system 5, the rejected delivery systems 2 that were piled up on top of the transferred rejected delivery system 2 move downwards along the inclined plate 15 towards the outlet 14 to be transferred to the transport system 5.

The hopper 4 further comprises side walls 16, 17 that extend from opposing edges of the inclined plate 15 between the inlet 13 and the outlet 14. The side walls 16, 17 are spaced apart by a length greater than the length of the rejected delivery system 2. The side walls 16, 17 are configured to retain the rejected delivery systems 2 in the hopper 4 until the rejected delivery systems 2 reach the lower end 12 of the hopper 4 and pass out of the outlet 14 when they are picked up by the transport system 5. In some embodiments, at least one of the side walls 16, 17 may be moveable in a direction parallel to the longitudinal axis A of the rejected delivery systems 2 such that the length of the rejected delivery system 2 that the hopper 4 can receive is adjustable.

The transport system 5 is configured to convey a rejected delivery system 2 along a conveyance path in a conveyance direction, indicated by arrow C. As shown in Fig. 3 and Fig. 5, the conveyance direction C is perpendicular to the longitudinal axis A of a rejected delivery system 2.

The transport system 5 comprises a transport member 5a. The transport member 5a comprises a conveying surface 21 on which a rejected delivery system 2 is received after it is transferred from the hopper 4. The transport member 5a further comprises a first end 21a and an opposing second end 21b at either end of the conveying surface 21, as shown in Fig. 4..

The conveying surface of the transport member 5a may comprise a recess 22. The recess 22 is configured to receive a rejected delivery system 2 for conveyance along the conveyance path. The recess 22 extends perpendicularly to the conveyance direction C. That is, the recess 22 extends across the width of the transport member 5a. Thus, the recess 22 has a first end 22a open to the edge of the transport member 5a at the first end 21a of the transport member 5a. In some embodiments, a second end 22b of the recess 22 may also be open to the opposing side of the transport member 5a at the second end 21b of the transport member 5a, as shown in Fig. 4.

The recess 22 is configured to receive a rejected delivery system 2. Therefore, the recess 22 is a U-shaped recess. The U-shaped recess 22 has a substantially semi-circular portion 23 and an opposing open portion 24 connected to the semi-circular portion 23 by straight walls 25. However, it will be appreciated that in an alternative embodiments, the recess 22 may have a different cross-sectional shape, for example, but not limited to, semi-circular. As shown in the Figures, the transport member 5a may comprise a plurality of recesses 22. That is, the transport member 5a comprises spaced parallel recesses 22, each recess 22 being configured to receive a rejected delivery system 2 for conveyance along the conveyance path.

The semi-circular end 23 of the recess 22 is configured to receive a rejected delivery system 2. Furthermore, the depth of the recess 22 from the conveying surface 21 is configured to be less than the diameter of the rejected delivery system 2, as will be explained in more detail hereinafter. Therefore, when a rejected delivery system 2 is received in the recess 22 of the transport member 5a, the delivery system 2 protrudes slightly above the conveying surface 21.

In the present embodiment, the transport member 5a comprises a cylindrical drum 26. The cylindrical drum 26 is a rotary drum. The cylindrical drum 26 comprises a conveying surface 21, which is the circumferential surface of the cylindrical drum. The recess 22 extends into the circumferential surface of the cylindrical drum 26 and is configured to receive a rejected delivery system 2, as described above.

Using a rotary drum as the transport member provides the benefits, amongst others, that a drum is particularly suited for providing a strong support surface and that a drum is able to be operated at high speeds.

Referring briefly back to Fig. 2, the cylindrical drum 26 is connected to a shaft 27. The shaft 27 extends through the centre of the cylindrical drum 26 to provide its point of rotation about its rotational axis R, so that the cylindrical drum can be rotated. Thus, a rejected delivery system 2 received on the cylindrical drum 26 follows an arcuate path as it is conveyed along the conveyance path of the cylindrical drum 26.

The apparatus 1 further comprises a stationary unit 28. The stationary unit 28 may be considered to be a part of the transport system 5. The stationary unit 28 is located on one side of the transport member 5a. The transport member 5a is configured to move, or more specifically rotate, relative to the stationary unit 28. In the present embodiment, the stationary unit 28 is located on a side of the transport member 5a along the rotational axis R of the transport member 5a. That is, the stationary unit 28 is positioned adjacent to the conveyance path of a rejected delivery system 2 around the transport member 5a. The stationary unit 28 comprises an end plate 29. The end plate 29 is placed against the transport member 5a to close the first end 22a of the recess 22.

In the present embodiment, the stationary unit 28 is generally cylindrical. However, in an alternative embodiment the stationary unit 28 may take whatever shape allows the stationary unit 28 to be placed adjacent to the conveyance path of a rejected delivery system 2 on the transport member 5a, for example, but not limited to, arcuate or sector shaped. The stationary unit 28 is configured to provide fluid conduits positioned relative to the transport member 5a to carry out various functions, as will be described in more detail hereinafter. Therefore, the stationary unit 28 has a diameter that is at least a similar size to the diameter of the cylindrical drum 26. The transport member 5a and the stationary unit 28 may be hermetically sealed together along their facing surfaces.

In the embodiment described above, the transport member 5a comprises a cylindrical drum 26. However, it will be understood by a person skilled in the art that in an alternative embodiment the transport member 5a may comprise an endless conveyor belt (not shown).

Referring now to Fig. 4, the recess 22 located on the transport member 5a may comprise a vacuum arrangement 30 configured to hold a rejected delivery system 2 on the transport member 5a. The vacuum arrangement 30 may comprise an aperture 31. In the present embodiment, the aperture 31 is formed in the base of the recess 22, i.e. the inner most portion of the recess, which in this example is the semi-circular portion 23. It can be seen from Fig. 4 that the aperture 31 has a circular cross-section, although in alternative embodiments the aperture 31 may have a different cross-section.

The aperture 31 is an opening to a fluid channel 32. The fluid channel 32 extends from the aperture 31 through the transport member 5a to the side of the transport member 5a located proximate to the stationary unit 28. In the present embodiment, each recess 22 comprises a plurality of apertures 31. Each of the plurality of apertures 31 is connected to the fluid channel 32.

The stationary unit 28 may comprise or be connectable to a suction conduit 33. The suction conduit 33 is configured to provide suction to the fluid channel 32. The suction conduit 33 is connectable via a fluid channel 34 to a vacuum generator (not shown). Thus, when the suction conduit 33 is fluidly connected to the fluid channel 32, air is sucked in through the apertures 31. Consequently, suction is applied to a rejected delivery system 2 received in the recess 22 to retain the rejected delivery system 2 in the recess 22.

The stationary unit 28 may further comprise a vacuum chamber 35. The suction conduit 33 is fluidly connected to the vacuum chamber 35. In some embodiments, the vacuum chamber 35 may be closed on one side by the transport member 5a. In other embodiments, the vacuum chamber 35 may comprise an opening (not shown) configured to fluidly communicate with fluid channels 32 over a predetermined range. That is, the opening of the vacuum chamber 35 may extend a predefined distance parallel to the conveyance path to fluidly communicate with fluid channels 32 being rotated through that portion of the conveyance path.

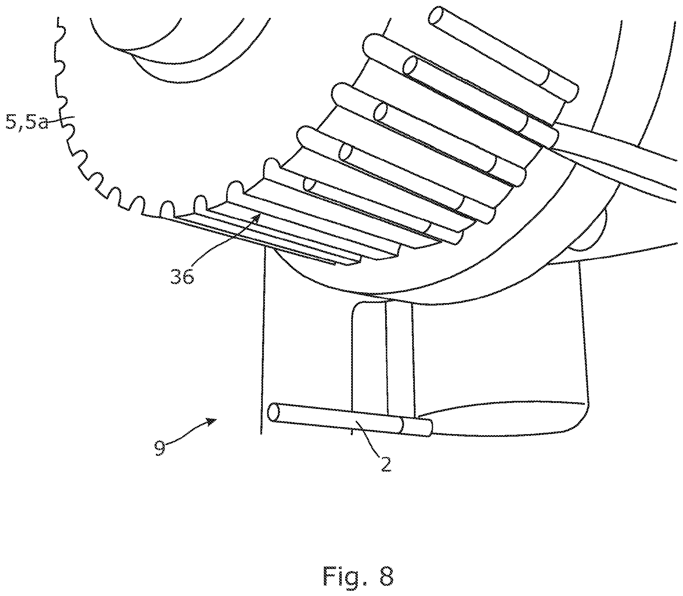

The vacuum chamber 35 may extend from an area adjacent to the conveyance path the outlet 14 of the hopper 4 around the stationary unit 28 in the direction of the conveyance path to a rejected delivery system discard point 36, shown in Fig. 8. In an alternative embodiment, the rejected delivery system discard point 36 may be a rejected delivery system transfer point 36. Thus, suction through the apertures 31 may be maintained for a predetermined portion of the conveyance path of a rejected delivery system 2. The predetermined portion of the conveyance path in which suction is applied may be the whole conveyance path of a rejected delivery system 2 on the transport member 5a.

Thus, as the recess 22 on the transport member 5a moves along the conveyance path, its fluid channel 32 comes into fluid communication with the suction conduit 33 and the vacuum chamber 35 so that air is sucked through the apertures until the recess 22 reaches the rejected delivery system discard/transfer point 36. Therefore, as the recess 22 passes the outlet 14 of the hopper 4, the suction of air through the apertures 31 secures a rejected delivery system 2 in the recess until the rejected delivery system discard/transfer point 36. Thus, the rejected delivery system 2 are drawn into each recess 22 in the transport member 5a under vacuum.

Referring to Fig. 5, the stationary unit 28 further comprises a vacuum conduit 41. The vacuum conduit 41 is located adjacent to the conveyance path. Furthermore, the vacuum conduit 41 is located upstream of the fluid conduit 7. The vacuum conduit 41 is configured to provide suction to the first end 22a of the recess 22 on the transport member 5a to align a rejected delivery system 2 received in a recess 22 at the first end 22a of the recess 22.

The vacuum conduit 41 comprises a second hole 42, which extends thought the end plate 29 of the stationary unit 28. The second hole 42 is positioned to sequentially fluidly communicate with each recess 22 as the transport member 5a moves to convey rejected delivery systems 2 along the conveyance path, prior to reaching the first conduit 7 and prior to engagement of a rejected delivery system 2 on the transport member 5a by the retainer 6. The vacuum conduit 41 is configured to move a rejected delivery system 22 received in a recess 22 in a longitudinal direction such that the filter portion 3a end of the rejected delivery system 2 is positioned against the end plate 29.

The vacuum conduit 41 may further comprise a second nozzle 43. The second nozzle 43 may be located on a side face of the stationary unit 28, opposite to the endplate 29, and may face the recess 22. The second nozzle 43 may be fluidly connected to the first end 22a of the recess 22 by the second hole 42. Therefore, the second hole 42 may be fluidly connected to the second nozzle 43 at one end and extends through the stationary unit 28 from one side to the other side where it is fluidly connected with a recess 22 as the transport member 5a moves. Thus, the second hole 42 may comprise an opening 44 in the end plate 29 of the stationary unit 28 proximate to the transport member 5a.

The vacuum conduit 41 may further comprise or be connectable to a vacuum generator (not shown). The vacuum generator for the vacuum conduit 41 may be the same as the vacuum generator for the suction conduit 33. It will be appreciated that in some embodiments the suction applied through the fluid channel 32 and apertures 31 may be temporarily suspended whilst suction through the vacuum conduit 41 is applied in order to more easily align the rejected delivery system 2 received in the recess 22. In other embodiments, suction provided by the vacuum conduit 41 may be great enough to overcome any suction provided through the fluid channel 32 and apertures 31.

Thus, in the present embodiment, when the rejected delivery systems 2 are picked up by the transport member 5a, the rejected delivery systems 2 are orientated in the recesses 22 with their first end, i.e. their filter portions 3a, proximate the first end 22a of the recess. That is, the filter portions 3a of the rejected delivery systems 2 are located proximate to the stationary unit 28. The opposite end of the rejected delivery systems 2, i.e. the substance portion 3b, is located proximate to the second end 22b of the recess 22; distal to the stationary unit 28.

However, when a rejected delivery system 2 is picked up by the transport member 5a, the rejected delivery system 2 may be located in any position along the recess 22. Thus, when a recess is moved past the opening 44 of the vacuum conduit 41, a suction force is applied to the filter portion 3a end of the rejected delivery system 2 in the recess 22 that moves the rejected delivery system 2 to the first end 22a of the recess 22. Therefore, each rejected delivery system 2 is aligned in the conveyance direction, as illustrated in Fig. 5 downstream of the vacuum conduit 41. That is, the filter portion 3a of each delivery system 2 is located at the first end 22a of the recess 22 proximate to the stationary unit 28.

It will be appreciated that in alternative embodiments, the second nozzle 43 may be located in the second hole 42 or omitted. Furthermore, in some embodiments, there maybe a plurality of second holes 42.

Referring back to Fig. 1, the retainer is illustrated. The retainer 6 is configured to engage a rejected delivery system 2 to retain the rejected delivery system 2 on the transport member 5a, which in some embodiments is received in the recess 22 of the transport member 5a. More specifically, the retainer 6 is configured to engage the rejected delivery system 2 received in a recess 22 over a portion of the conveyance path. The retainer 6 may be configured to contact only, or at least substantially only, the filter portion 3a of a rejected delivery system 2.

The retainer 6 is configured to face the transport member 5a of the transport system 5. The retainer is located downstream of the vacuum conduit 41. The retainer 6 faces and extends along a portion of the conveyance path of the transport member 5a that extend over the location of the fluid conduit 7. In some embodiments, the retainer 6 faces and extends along a portion of the conveyance path of the transport member 5a both upstream and downstream of the fluid conduit.

The retainer 6 is positioned relative to the transport member 5a such that movement of a rejected delivery system 2 perpendicular to the conveyance direction is prohibited along the portion of the conveyance path. Preferably, the retainer 6 is configured to contact the transport member 5a along the portion of the conveyance path.

The retainer 6 is moveable together with the transport member 5a. That is, the retainer may be driven by the same motor (not shown) as the transport member 5a, by a separate motor (not shown) driven synchronously with the motor (not shown) driving the transport member 5a, or by friction between the transport member 5a and the retainer 6.

In the present embodiment, the retainer 6 comprises an endless flexible belt 51. The endless flexible belt 51 rotates in a direction opposite to the direction in which the transport member 5a moves to covey a rejected delivery system 2 along the conveyance path. That is, when viewed from the front, i.e. looking along the rotational axis R of the transport member 5a, if the transport member 5a moves generally clockwise then the retainer moves generally anti-clockwise. Preferably, the endless flexible belt 51 and the transport member 5a move at the same speed.

The endless flexible belt is configured to contact the transport member 5a along the portion of the conveyance path. The endless flexible belt is configured such that a section of the belt 51 contacts the transport member 5a to press a rejected delivery system against the surface of the transport member 5a. In the present embodiment, the endless flexible belt 51 contacts the transport member 5a to press a rejected delivery system 2 into the recess 22 that the rejected delivery system 2 is received in on the transport member 5a. Thus, each rejected delivery system 2 is retained by both the vacuum through the aperture 31 and the retainer 6. The main function of the suction provided through the apertures 31 is to hold a rejected delivery system 2 in a recess against gravity. The main function of the retainer 6 is to hold a rejected delivery system 2 in a recess 22 when a jet of gas is applied through the fluid conduit 7. In the present embodiment, an outer surface 52 of the endless belt 51 contacts the transport member 5a and a rejected delivery system 2 received in a recess 22 of the transport member 5a when the recess 22 is located within the portion of the conveyance path.

The retainer 6 further comprises a plurality of rollers 53 about which the endless flexible belt 51 travels. The roller 53 comprise a circumferential surface 54, which contact the endless flexible belt 51. As illustrated in Fig. 1, the present embodiment comprises five rollers 53a-53e. Each roller 53 is mounted on a shaft 55 so that the roller 53 can rotate about its rotational axis. The rollers 53a-53e are positioned to that the endless flexible belt 51 is under tension. The retainer 6 may further comprise a tension roller (not shown) which is configured to move so that the endless flexible belt 51 is under tension during use.

The endless flexible belt 51 is made from a resiliently deformable material. The endless flexible belt 51 is configured to deform to assume the contour of the transport member 5a along the portion of the conveyance path, as described below. In some embodiments, the endless flexible belt 51 may also deform slightly in the areas where it is in contact with a rejected delivery system 2 without significantly reducing the force applied to retain the rejected delivery system 2 against the transport member 5a. The endless flexible belt 51 may be formed from, for example, but not limited to, rubber, or a thermoplastic, or a series of links in a chain. Preferably, the endless flexible belt 51 comprises a friction surface to engage the rejected delivery systems 2 and/or the transport member 5a.

In the present embodiment, first and second rollers 53a, 53b are positioned relative to the cylindrical drum 26 so that the endless flexible belt 51 is forced into contact with the circumferential conveying surface 21 of the transport member 5a. That is, the first and second rollers 53a, 53b are positioned such that, although spaced from the rotary drum 26, a tangential line extending between the circumferential surface 54 of the first and second rollers 53a, 53b intersect the circumferential surface 21 of the cylindrical drum 26.

Thus, as illustrated in Fig. 6, the cylindrical drum 26 causes the endless flexible belt 51 to curve around its circumferential surface 21. This may introduce tension into or increase tension in the endless flexible belt 51 and causes the endless flexible belt 51 to provide a compressive force on the circumferential surface 21 of the rotary cylindrical drum 26. Therefore, the endless flexible belt 51 provides a compressive force on a rejected delivery system 2, which protrudes slightly from a recess 22, as shown in Fig. 6, as a rejected delivery system 2 is moved through the portion of the conveyance path.

This compressive force secures a rejected delivery system 2 in the recesses 22 and prevents movement of a rejected delivery system 2 perpendicular to the conveyance direction along the portion of the conveyance path in which the transport member 5a and the retainer 6 face each other. The compressive force may also dislodge or displace some of the substance in the substance portion 3b of a rejected delivery system 2.

It will be appreciated that in an alternative embodiment, the outer surface 52 of the endless flexible belt 51 of the retainer 6 may not contact the conveying surface 21 of the transport member 5a but still provide a large enough compressive force to prohibit movement of a rejected delivery system 2 perpendicular to the conveyance direction.

Referring now to Fig. 7, the fluid conduit 7 and collector 8 are shown. The fluid conduit 7 is located adjacent to the conveyance path. The fluid conduit 7 is configured to direct a jet of gas into the filter end 3a of a rejected delivery system 2 to expel a substance from an opposite end 3b of a rejected delivery system 2. The fluid conduit 7 is configured to direct the jet of gas into the first end 22a of the recess 22 on the transport member 5a.

The fluid conduit 7 comprise a first hole 61 that extends through the end plate 29. The first hole 61 is positioned to sequentially communicate a jet of gas with each recess 22 as the transport member 5a moves to convey rejected delivery systems 2 along the conveyance path. The first hole 61 is configured such that the jet of gas is directed into the filter end 3a of a rejected delivery system 2 received on the transport member 5a, preferably in a recess 22.

The fluid conduit 7 may further comprise a first nozzle 62. The first nozzle 62 may be located on a side face of the stationary unit 28, opposite to the end plate 29, and may face the recess 22. The first nozzle 62 may be fluidly connected to the first end 22a of the recess 22 by the first hole 61. Therefore, the first hole 61 may be fluidly connected to the first nozzle 62 at one end and extends through the stationary unit from one side to the other side where it is fluidly connected wait a recess 22 as the transport member 5a rotates. Thus, the first hole 61 may comprise an opening 63 in the end plate 29 of the stationary unit 28 proximate to the transport member 5a. The fluid conduit 7 may further comprise or be connectable to a pressurised gas source (not shown). The pressurised gas source may be in the form of, for example, but not limited to, a compressor or pump.

Thus, as a rejected delivery system 2 is conveyed along the conveyance path in the conveyance direction by the transport member 5a, the rejected delivery system 2 is subjected to a compressive force by the retainer 6. As the rejected delivery system 2 is further conveyed, the rejected delivery system 2 is conveyed to the fluid conduit 7. As the rejected delivery system 2 passes the fluid conduit 7, a jet of gas is exhausted out of the first hole 61 into the first end 22a of the recess 22. The jet of gas is forced through the filter portion 3a of the rejected delivery system 2 and removes a substance from the substance portion 3b of the rejected delivery system 2. The compressive force on the filter portion 3a end of the rejected delivery system 2 by the transport member 5a and the retainer is sufficient to prevent the filter end 3a of the rejected delivery system 2 moving perpendicularly to the conveying direction, i.e. the filter portion 3a does not move in the direction of its longitudinal axis along the recess 22.

The jet of gas removes the substance from the opposite end 3b of the rejected delivery system 2 and forces the substance along the recess 22 towards the second end 22b of the recess 22. The jet of gas may be of sufficient pressure to blow the substance out of the recess 22 and into the collector 8. Alternatively or in addition, the collector 8 may be configured to collect the substance expelled from the rejected delivery system 2 under suction.

It will be appreciated that in alternative embodiments, the first nozzle 62 may be located in the first hole 61 or omitted. Furthermore, in some embodiments, there may be a plurality of first holes 61.

The collector 8 comprises an inlet 71 configured to collect the substance expelled from the rejected delivery systems 2 and ejected from the recess 22. The inlet 71 to the collector 8 may take the form of a funnel. The collector 8 may further comprise a return conduit 72, shown in Fig. 1, configured to return the recovered substance to a delivery system manufacturing apparatus (not shown) so that the substance can be reused in the manufacturing process. That is, the funnel may be connected to the return conduit and a suction pump (not shown) to draw the expelled substance into the funnel 71 and along the conduit 72. In another embodiment, the return conduit 72 may be configured to return the recovered substance to a collection device configured to collect and store the recovered substance, which can then be transported to a manufacturing apparatus at a later point in time.

Referring now to Fig. 8, the apparatus 1 further comprises a container 9. The container 9 is configured to collect the rejected delivery systems 2 that have had their substance removed, i.e. the filter portion 3a and the substance rod wrapper of the rejected delivery system 2. The container 9 is positioned below the rejected delivery system discard point 36, which is at the end of the vacuum chamber 35 of the suction conduit 33.

Thus, once the substance has been removed from the rejected delivery system 2, the substance-less rejected delivery system 2 is conveyed along the conveyance path until the retainer 6 is removed from contact with the substance-less rejected delivery system 2. The suction from the suction conduit 33 may remain applied until the delivery system discard point 36. At the delivery system discard point 26, the apertures 31 in the recess 22 are no longer in fluid communication with the vacuum chamber 35 and so are able to fall out of the recess 22 under gravity. In an alternative embodiment, an ejection unit (not shown) may also be employed to remove the substance-less rejected delivery system 2 from the recesses 22.

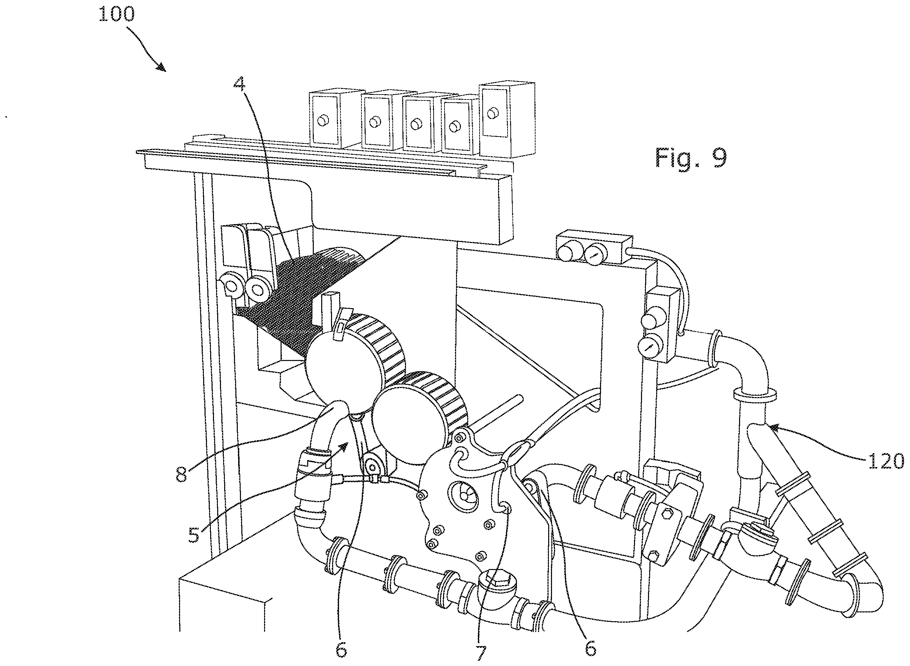

Referring now to Fig. 9 to Fig. 13, there is shown another embodiment of the apparatus 100. The apparatus 100 is generally the same as the embodiment of the apparatus 1 described above so a detailed description will be omitted herein. Furthermore, features and components of the apparatus 100 will retain the same terminology and reference numerals. The main difference between the embodiment described above in relation to Fig. 1 to Fig. 8, and the embodiment described in Fig. 9 to Fig. 13 is the number of transfer drums 5 and retainers 6 that form the apparatus 100.

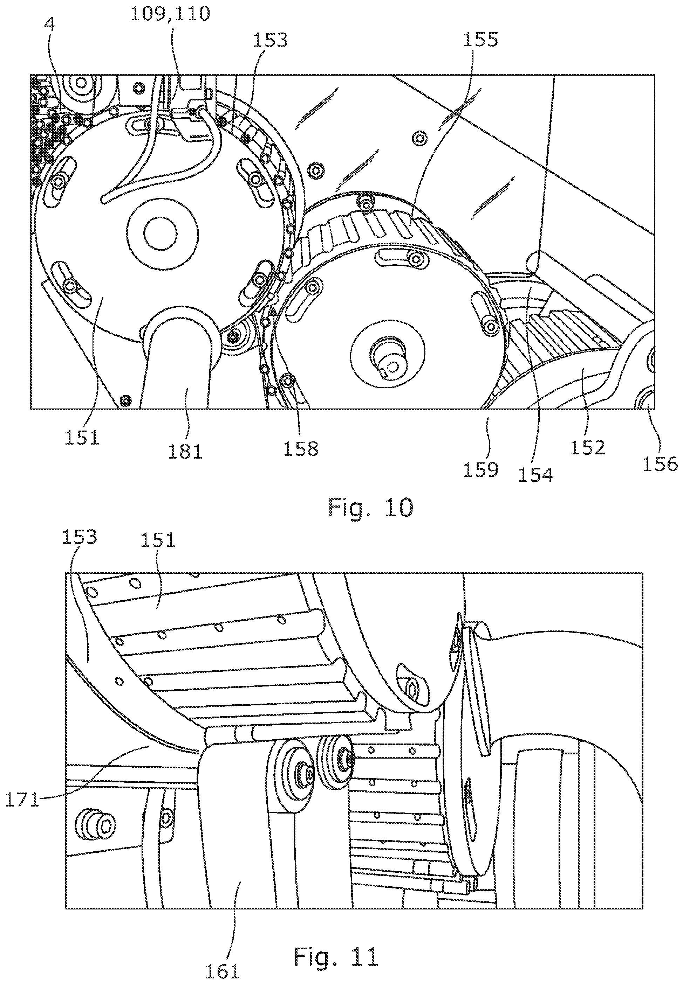

Referring to Fig. 9 and Fig. 10, the apparatus 100 comprises a hopper 4, a transport system 5, at least one retainer 6, and a plurality of fluid conduits 7, and a plurality of collectors 8, as will be described in more detail hereinafter.

The transport system 5 comprises a plurality of transport members 5a. The plurality of transport members 5a comprises a first transport member 151 and a second transport member 152. In the present embodiment, the first transport member is a rotary drum 151, also referred to as a first transport drum. In the present embodiment, the second transport member is a rotary drum 152, also referred to as a second transport drum.

The first and second transport member 151, 152 are configured to receive a rejected delivery system 2 and convey the rejected delivery system 2 along a conveyance path in a conveyance direction. The conveyance direction is perpendicular to a longitudinal axis A of the rejected delivery system 2. The conveyance path comprises a first section of the conveyance path about the first transport member 151 and a second section of the conveyance path about the second transport member 152.

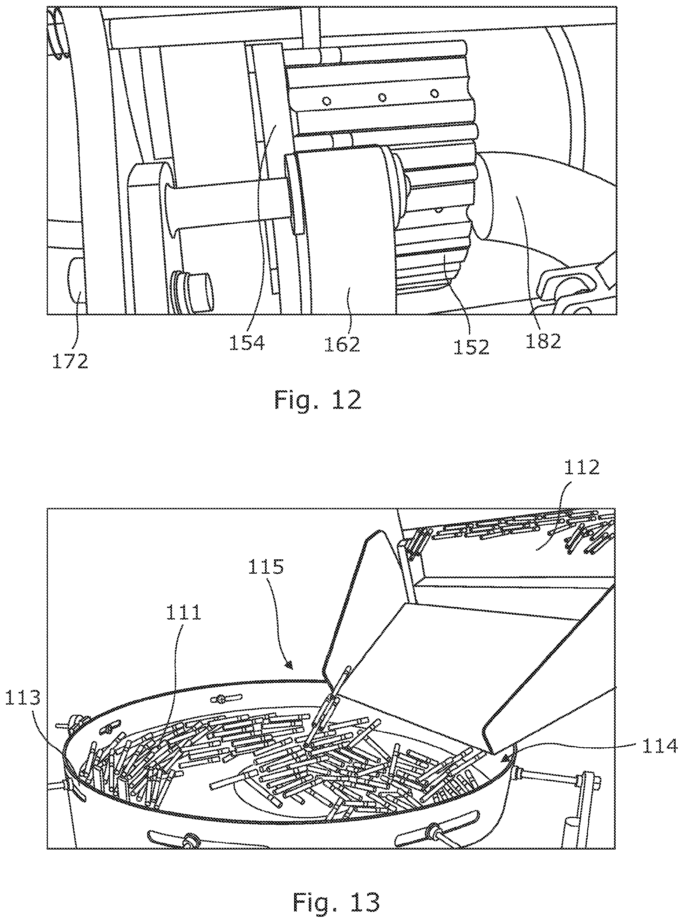

The plurality of fluid conduits comprises a first fluid conduit 171, see Fig. 11, and a second fluid conduit 172, see Fig. 12. The first and second fluid conduits 171, 172 are located adjacent to the conveyance path. That is, the first fluid conduit 171 is located adjacent to the first section of the conveyance path about the first transport drum 151 and the second fluid conduit 172 is located adjacent to the second section of the conveyance path about the second transport drum 152.

The first fluid conduit 171 is configured to direct a jet of gas into the filter portion 3a end of a rejected delivery system 2 to expel a substance from the substance portion 3b end, i.e. aerosol-generating material end, of a rejected delivery system 2, whilst the rejected delivery system 2 is retained on the first transport member 151. The second fluid conduit 172 is configured to direct a jet of gas into the filter portion 3a end of a rejected delivery system 2 to expel a substance from the substance portion 3b end of a rejected delivery system 2, whilst the rejected delivery system 2 is retained on the second transport member 152.

The apparatus 100 comprises at least one retainer 6. For example, in one embodiment that is not illustrated, the apparatus 100 may comprise a single retainer 6. The single retainer 6 may comprise a single endless flexible belt configured to contact both the first transfer drum 151 and the second transfer drum 152 to retain rejected delivery systems 2 on their respective transfer drums 151, 152.

In the present embodiment, the apparatus 100 comprises a first retainer 161, shown in Fig. 11, and a second retainer 162, shown in Fig. 12. The first retainer 161 comprises a first endless flexible belt 161 and the second retainer 162 comprises a second endless flexible belt 162.

The first endless flexible belt 161 may extend along a portion of the first section of the conveyance path upstream and downstream of the first fluid conduit 171. The first transport member 151 and the first endless flexible belt 161 are positioned such that the movement of the rejected delivery system 2 perpendicular to the conveyance direction is prohibited along the portion of the first section of the conveyance path, as illustrated in Fig. 11.

The second endless flexible belt 162 may extend along a portion of a second section of the conveyance path upstream and downstream of the second fluid conduit 172. The second transport member 152 and the second endless flexible belt 162 are positioned such that the movement of the rejected delivery system 2 perpendicular to the conveyance direction is prohibited along the portion of the conveyance path, as shown in Fig. 12.

The first transport member 151 is the generally the same as the transport member 5a described with reference to Fig. 1 to Fig. 8 so a detailed description will be omitted herein.

Fig. 10 shows the lower end of the hopper 4. The hopper 4 is generally the same as the hopper 4 described with reference to Fig. 3 and so a detailed description will be omitted herein. However, in the present embodiment, the rejected delivery systems 2 in the hopper 4 may be orientated in one of two orientations: a first orientation or a second orientation.

The apparatus 100 further comprises a sensor 109. The senor 109 is configured to detect the orientation of a rejected delivery system 2 on the first transport member 151. That is, the sensor 109 determines which end of the recess 22 the filter portion 3a of the rejected delivery system 2 is located proximate to. In the first orientation, the filter portion 3a of a rejected delivery system 2 is located proximate the first end 22a of the recess 22 on the first transfer drum 151. In the second orientation, the filter portion 3a of a rejected delivery system is located proximate to the second end 22b of the recess 22 on the first transfer drum 151. As will be explained in more detail hereinafter, a substance is recovered from a rejected delivery system 2 that is in the first orientation on the first transport member 151 and a substance is recovered from a rejected delivery system 2 that in in the second orientation on the second transport member 152. The sensor 109 may be, for example, but not limited to a camera.

As mentioned above, the sensor 109 determines which end of the recess 22 the filter portion 3a of a rejected delivery system 2 is located. The sensor 109 may be connected to a controller 110. In the present embodiment, the controller 110 is integrated with the sensor 109. The controller 110 is configured to control at least the first fluid conduit 171 such that a jet of gas is only directed through the first fluid conduit 171 when a rejected delivery system 2 that is in the first orientation is in alignment with the first fluid conduit 171. Therefore, only rejected delivery systems 2 in the first orientation, i.e. with their filter portion 3a adjacent to the first fluid conduit 171 have a jet of gas directed into them in order to expel a substance form the substance portion 3b into a first collector 181, as shown in Fig. 11.

The controller 110 may also be configured to control the vacuum conduit 41 and provision of suction to the first end 22a of the recess 22 on the first transfer drum 151. Therefore, suction through the vacuum conduit 41 and opening 44 may only be applied to rejected delivery systems 2 in the first orientation on the first transfer drum 151. This prevents the vacuum conduit from sucking a substance form a substance portion 3b end of a rejected delivery system 2 in the second orientation on the first transfer drum 151.

As shown in Fig. 10 and Fig. 12, the second transfer drum 152 is generally the same as the first transfer drum 151. The second transfer drum 152 is located downstream on the conveyance path from the first transfer drum 151. The second transfer drum 152 may comprise a vacuum arrangement 30 similar to the one described above. Therefore, the second transfer drum 152 is able to receive rejected delivery systems 2 onto its surface using suction to assist the process. In some embodiments, the second transfer drum 152 may receive rejected delivery systems 2 in the second orientation directly from the first transfer drum 151.

The process of moving rejected delivery systems 2 in the second orientation to the second transfer drum 152 whilst retaining rejected delivery systems 2 in the first orientation on the first transfer drum 151 may be controlled by the controller 110, which can selectively provide suction to the vacuum arrangements on the first and second transfer drums 151, 152.

The first transport member 151 has a first stationary unit 153 located on a first side of the first transport member 151, as described above in relation to the transport member 5a. That is, the first stationary unit 153 is located adjacent to the first section of the conveyance path proximate to the first end 21a of the first transfer member 151, and in some embodiments the first end 22a of the recess 22.

Referring to Fig. 12, the second transport member 152 has a second stationary unit 154. The second stationary unit 154 is essentially the same as the stationary unit 28 described above in relation to Fig. 1 to Fig. 8. However, in the present embodiment, the second stationary unit 154 is located on the opposite side of the second transfer drum 152 when compared to the location of the first stationary unit 153 relative to the first transfer drum 151. That is, the second stationary unit 154 is located adjacent to the second section of the conveyance path proximate to the second end 21b of the second transfer member 152, and in some embodiments the second end 22b of the recess 22.

Therefore, the second fluid conduit 172 on the second transfer member 152 directs a jet of gas in the opposite direction to the first fluid conduit 171 on the first transfer member 151. As a result, the apparatus 100 is provided with a first collector 181 and a second collector 182. The first collector 181 is configured to collect a substance expelled from a rejected delivery system 2 in the first orientation on the first transport drum 151 by the first fluid conduit 171, as shown in Fig. 10 and Fig. 11. The second collector 182 is configured to collect a substance expelled from a rejected delivery system 2 in the second orientation on the second transport drum 152 by the second fluid conduit 172, as shown in Fig. 12.

Furthermore, it will be understood by a person skilled in the art that the arrangement of the second endless flexible belt 162 will be similar to the arrangement of the endless retainer 6 described above with reference to Fig. 1 to Fig. 8 with minor modifications in order to fit around the structure of the presently described embodiment.

Referring back to Fig. 10 briefly, the transport system 5 of the apparatus may further comprise an intermediate transport member 155. The intermediate transport member 155 may be an intermediate transfer drum 155. The intermediate transfer drum 155 is located between the first transport drum 151 and the second transport drum 152. The intermediate drum 155 is generally the same as the transport member 5a described above with reference to Fig. 1 to Fig. 8, except that the intermediate drum does not comprise a fluid conduit or a stationary unit.

However, in an alternative embodiment of the apparatus 100 comprising the intermediate drum 155, the intermediate drum 155 may comprise a third stationary unit (not shown) comprising vacuum conduit 41 for aligning the rejected delivery systems 2 in the second orientation against the third stationary unit. Therefore, it is not essential for the second stationary unit 154 adjacent to the second transport member 152 to include a vacuum conduit 156 in the end plate if the vacuum conduit 156 is provided on an intermediate drum 155..

Referring briefly to Fig. 13, the apparatus 100 may further comprise a rotary feeder 111 configured to receive a rejected delivery system 2 from a rejected delivery system conveyor 112. The rejected delivery system conveyor 112 is configured to feed rejected delivery systems 2 into the centre of the rotary feeder 111. As the rotary feeder rotates, the rejected delivery systems 2 are moved outwards radially until the travel around the circumferential wall 113 of the rotary feeder 111. When the rejected delivery systems 2 are aligned substantially tangentially with the circumferential wall of the rotary feeder 111, they can pass out of the rotary feeder outlet 114 and along a conveyor 115 into the hopper 4.

For clarity and completeness, a method of recovering a substance from a rejected delivery system 2 will now be described with reference to the apparatus described in relation to Fig. 9 to Fig. 13.

The rejected delivery systems 2 are rejected by an inspection unit of an apparatus (not shown) and fed to the rejected delivery systems conveyor 112, as shown in Fig. 13, which feeds the rejected delivery systems into a rotary feeder 111. The rotary feeder 111 aligns the rejected delivery systems 2 using centrifugal force and feeds rejected delivery systems via a conveyor 114 to a hopper 4, where they are received in one of two parallel configurations.

The rejected delivery systems 2 are fed from the outlet 14 at the bottom of the hopper 4 onto the first transfer drum 151. The first transfer drum 151 may provide suction through apertures 31 in the recess 22 at the outlet 14 of the hopper 4 to draw a rejected delivery system 2 into the recess 22. Suction is applied through the apertures 31 to hold the rejected delivery system 2 in the recess 22 as the first transport member 151 rotates in a clockwise direction.

The first transport member 151 rotates the rejected delivery system 2 past a sensor 109. The sensor 109 determines the orientation of the rejected delivery system on the first transport member 151.

When the sensor 109 determines that the rejected delivery system 2 is in the first orientation, the controller 110 instructs the vacuum conduit 41 of the first transport member 151 to provide suction to the first end 21a of the first transport member 151 in order to move the rejected delivery system 2 to the first end 21a of the first transport member 151, which in some embodiments is the first end 22a of the recess 22.

The first transport member 151 then rotates the rejected delivery system 2 past a first transfer point 158, where rejected delivery systems 2 in a second orientation are transferred to the intermediate transfer member 155, as will be explained in more detail below. Thus, the first transport member 151 maintains the suction provided to the rejected system 2 in the first orientation by the vacuum arrangement as it passes the first transfer point 158.

The first transport member 151 continues to rotate to the point where the first endless flexible belt 161 is brought into contact with the first transport member 151 to provide a compressive force on at least the filter portion 3a of the rejected delivery system 2 to retain the rejected delivery system 2 in the recess 22 of the first transport member 151. As the first transport member 151 and first endless belt 161 move together along the conveyance path past the first fluid conduit 171, a jet of gas is directed from the first fluid conduit into the filter end 3a of the rejected delivery system 2 in the first orientation in the recess 22 and a substance is expelled from the substance portion 3b of the rejected delivery system 2 into the first collector 181, as shown in Fig. 11.

The substance-less rejected delivery system 2 is then conveyed to the discard point 36 where it is removed from the first transfer member 151.

When the sensor 109 determines that the rejected delivery system 2 on the first transport member 151 is in the second orientation, the controller 110 may instruct the vacuum conduit 41 to not apply suction to the first end 22a of the recess 22. Therefore, suction is not applied to the substance portion end 3b of the delivery system. Removing suction at this point may prevent the smokeable material from being removed from the delivery system prematurely. The first transport member 151 rotates the rejected delivery system 2 to the first transfer point 158.

At the first transfer point 158, suction provided by the vacuum arrangement on the first transfer member 151 may be removed and suction provided by the vacuum arrangement on the intermediate transport member 155 is applied to transfer the rejected delivery system 2 in the second orientation from the first transport member 151 to the intermediate transport member 155. In addition or alternatively, the suction provided by the vacuum arrangement may be removed, or disrupted so that the rejected delivery system 2 can be transferred, by blowing a jet of air to disrupt the suction force.

The intermediate transport member 155 rotates anti-clockwise to transport the rejected delivery system 2.

The suction applied by the vacuum arrangement on the intermediate transport member 155 is maintained until the second transfer point 159 is reached. At the second transfer point 159, suction provided by the vacuum arrangement on the intermediate transfer member 155 is removed and suction provided by the vacuum arrangement on the second transport member 152 is applied to transfer the rejected delivery system 2 in the second orientation from the intermediate transport member 155 to the second transport member 152.

In the present embodiment, the second transport member 152 rotates clockwise, i.e. in the same direction as the first transport member 151. The second transport member 152 rotates past the vacuum conduit 156 on the second transport member 152 and the second stationary unit 154. The vacuum conduit 156 applies suction to the filter portion 3a of the rejected delivery system 2 located proximate the second end 22b of the recess 22 to align the rejected delivery system 2 at the end of the recess 22.

The second transport member 152 continues to rotate to the point where the second endless flexible belt 162 is brought into contact with the second transport member 152 to provide a compressive force on at least the filter portion 3a of the rejected delivery system 2 to retain the rejected delivery system 2 in the recess 22 of the second transport member 152.

As the second transport member 152 and the second endless flexible belt 162 move together along the conveyance path past the second fluid conduit 172, a jet of gas is directed from the second fluid conduit into the filter end 3a of the rejected delivery system 2 in the second orientation in the recess 22 and a substance is expelled from the substance portion 3b of the rejected delivery system 2 into the second collector 182, as shown in Fig. 12

The first and second collector 181, 182 both feed the expelled substance into the same sorting section 120 of the apparatus 100. The sorting section 120 may be configured to remove any contaminants from the substance and remove substance particles that are too small. The recovered substance that is suitable to be reused can be collected or fed directly back into a delivery system manufacturing apparatus (not shown).

The various embodiments described herein are presented only to assist in understanding and teaching the claimed features. These embodiments are provided as a representative sample of embodiments only, and are not exhaustive and/or exclusive. It is to be understood that advantages, embodiments, examples, functions, features, structures, and/or other aspects described herein are not to be considered limitations on the scope of the invention as defined by the claims, and that other embodiments may be utilised and modifications may be made without departing from the scope of the claimed invention. Various embodiments of the invention may suitably comprise, consist of, or consist essentially of, appropriate combinations of the disclosed elements, components, features, parts, steps, means, etc, other than those specifically described herein.

## Claims

1. An apparatus (100) for recovering a substance from rejected delivery systems, the apparatus comprising:
a transport system (5) configured to receive a rejected delivery system (2) and convey it along a conveyance path in a direction perpendicular to a longitudinal axis of a rejected delivery system, the transport system comprising a first transport member (151) and a second transport member (152);
at least one retainer (6) comprising an endless flexible belt (51, 161, 162) configured to engage a rejected delivery system received on the transport system over first and second portions of the conveyance path as a rejected delivery system travels along the conveyance path and to retain a rejected delivery system on the transport system; and
first and second fluid conduits (171, 172) configured to direct a jet of gas into a first end (3a) of rejected delivery systems to expel a substance from an opposite end (3b) of rejected delivery systems, whilst rejected delivery systems are transported along said portion of the conveyance path and retained on the transport system by the retainer,
wherein the first fluid conduit is configured to direct a jet of gas into a rejected delivery system on the first transport member and the second fluid conduit is configured to direct a jet of gas into a rejected delivery system on the second transport member,
wherein the first and second fluid conduits are on opposing sides of the first and second transport members such that a rejected delivery system orientated with its first end in a first direction is subjected to a jet of gas from the first fluid conduit on the first transport member and a rejected delivery system orientated with its first end in an opposing second direction is subjected to a jet of gas from the second fluid conduit on the second transport member.

2. The apparatus (100) according to claim 1, further comprising an intermediate transport member (155) located between the first and second transport members (151, 152), the intermediate transport member being configured to transfer a rejected delivery system (2) orientated with its first end (3a) in an opposing second direction from the first transport member to the second transport member, and optionally,
wherein a transfer point (158) between the intermediate transport member and the first transport member is located upstream of the first fluid conduit (171).

3. The apparatus (100) according to claim 1 or claim 2, further comprising a sensor (109) configured to determine the orientation of a rejected delivery system (2), and a controller (110) configured to transfer a rejected delivery system to the second transport member (152) when a rejected delivery system is orientated with its first end (3a) in an opposing second direction.

4. The apparatus (100) according to any one of claim 1 to claim 3, wherein the retainer (6) comprises a first endless flexible belt (161) configured to engage a rejected delivery system (2) on the first transport member (151) over a first portion of the conveyance path, and a second endless flexible belt (162) configured to engage a rejected delivery system on the second transport member (152) over a second portion of the conveyance path, or
wherein the retainer (6) comprises an endless flexible belt (51, 161) configured to engage a rejected delivery system (2) on the first transport member (151) over a first portion of the conveyance path and on the second transport member (152) over a second portion of the conveyance path.

5. The apparatus (100) according to any one of the preceding claims, wherein at least one transport member (151, 152) comprises a plurality of recesses (22), each recess spaced from adjacent recesses and extending parallel to one another, wherein each recess is configured to receive a rejected delivery system (2) for conveyance along the conveyance path, and optionally,
wherein at least one endless flexible belt (51, 161, 162) is configured to retain a rejected delivery system in at least one of the plurality of recesses.

6. The apparatus (100) according to claim 5, wherein at least one endless flexible belt (51, 161, 162) is configured to rotate in a direction opposite to the transport members (151, 152) that the at least one endless flexible belt contacts, such that the at least one endless flexible belt and the transport member it is in contact with move in the same direction over at least one of said first and second portions of the conveyance path, and optionally,
wherein at least one endless flexible belt and the at least one transport member in which the at least one endless flexible belt is in contact with are configured to move at the same speed over at least one of said first and second portions of the conveyance path.

7. The apparatus (100) according to claim 6, wherein a section of at least one of the endless flexible belts (51, 161, 162) contacts at least one transport member (151, 152) to at least partially compress a rejected delivery system (2) into its respective recess (22) on the at least one transport member as the at least one endless flexible belt and the at least one transport member are moved, and optionally,
wherein the at least one endless flexible belt is formed from a resiliently deformable material, said section of the at least one endless flexible belt in contact with at least one transport member being configured to deform to assume the contour of a section of the at least one transport member that the at least one endless flexible belt is in contact with and retain a rejected delivery system in its respective recess.

8. The apparatus (100) according to any one of claim 5 to claim 7, wherein each one of the plurality of recesses (22) has a first end (22a) that is open to a first edge of at least one transport member and a second end (22b) that is open to a second edge of the at least one transport member, and wherein the apparatus comprises at least one end plate (29) positioned against the at least one of the first and second transport members (151, 152) to close the first or second end of the recesses along a portion of the conveyance path.

9. The apparatus (100) according to claim 8, wherein at least one of the following:
- a first end (22a) of the recesses (22) on the first transport member (151) are closed by a first end plate along said first portion of the conveyance path, and wherein the first fluid conduit (171) comprises a first hole (61) extending through the first end plate, the first hole being positioned to be in sequential fluid communication with each recess as the first transport member (151) moves to convey a rejected delivery system (2) along the conveyance path,
- a second end (22b) of the recesses on the second transport member (152) are closed by a second end plate along said second portion of the conveyance path, and wherein the second fluid conduit (172) comprises a second hole extending through the second end plate, the second hole being positioned to be in sequential fluid communication with each recess as the second transport member moves to convey a rejected delivery system along the conveyance path, and
- further comprising a vacuum arrangement (30) comprising a suction hole (42) extending through the end plate (29) and positioned to sequentially communicate with each recess (22) as the at least one transport member (151, 152) moves to convey a rejected delivery system (2) along the conveyance path, prior to reaching the fluid conduit (171, 172) and engagement of a rejected delivery system on the transport member by the endless flexible belt (51, 616, 162), to pull a rejected delivery system in a longitudinal direction such that the first end (3a) of a rejected delivery system is positioned against the end plate.

10. The apparatus (100) according to any one of the preceding claims, wherein a collector (8) is positioned adjacent to the transport member (151, 152) to collect a substance expelled from a rejected delivery system, and optionally,
wherein the collector (8) is configured to collect an expelled substance under suction, and optionally,
wherein the collector comprises a funnel (71) connected to a conduit (72) and a suction pump to draw an expelled substance into the funnel and along the conduit, and optionally,
wherein the first and second collectors both feed an expelled substance into the same sorting section (120).

11. The apparatus (100) according to claim 10, wherein at least one of the following:
the conduit (72) transports an expelled substance into a sorting section (120) configured to separate an expelled substance from contaminants, and
the collector (8) comprises a first collector (181) positioned on a second end of the first transport member (151)and a second collector (182) positioned on a first side of the second transport member (152).

12. The apparatus (100) according to any one of the preceding claims, further comprising a hopper (4) configured to receive a rejected delivery system and feed a rejected delivery systems onto the transport member and optionally,
further comprising a rotary feeder (111) configured to receive a rejected delivery system from a rejected delivery system conveyor and feed a rejected delivery system to the hopper.

13. The apparatus according to any one of claim 9 to claim 12, wherein a rejected delivery system is drawn into each recess in the transport member under vacuum, and optionally,
wherein a rejected delivery system is retained in a recess by both vacuum and the endless flexible belt.

14. A delivery system manufacturing system including an inspection station and a rejection path for delivery systems rejected by the inspection station, and the apparatus (100) according to any one of the preceding claims positioned to receive rejected delivery systems (2) conveyed along the rejection path.

15. A method of extracting a substance from a rejected delivery system (2), the method comprising:
feeding a rejected delivery system onto a first transport member (151) and conveying the rejected delivery system along a conveyance path in a direction perpendicular to the longitudinal axis of the rejected delivery system;
engaging the rejected delivery system received on the first transport member with an endless flexible belt (51, 161) to retain the rejected delivery system on the first transport member;
directing a jet of gas into a first end (3a) of the rejected delivery system being conveyed along the conveyance path that are in a first orientation, and which is retained on the first transport member by the endless flexible belt, to expel a substance from an opposite end of the rejected delivery system, and
transferring rejected delivery systems received on the first transport member in a second orientation to a second transport member (152),
engaging the rejected delivery system received on the second transport member with an endless flexible belt (51, 162) to retain the rejected delivery system on the second transport member;
directing a jet of gas into a first end (3a) of the rejected delivery system being conveyed along the conveyance path that are in the second orientation, and which is retained on the second transport member by the endless flexible belt, to expel a substance from an opposite end of the rejected delivery system.

## Patentansprüche

1. Vorrichtung (100) zur Rückgewinnung einer Substanz aus zurückgewiesenen Abgabesystemen, wobei die Vorrichtung Folgendes umfasst:
ein Transportsystem (5), das dazu konfiguriert ist, ein zurückgewiesenes Abgabesystem (2) aufzunehmen und es entlang eines Förderwegs in einer Richtung senkrecht zu einer Längsachse eines zurückgewiesenen Abgabesystems zu fördern, wobei das Transportsystem ein erstes Transportelement (151) und ein zweites Transportelement (152) umfasst,
mindestens einen Halter (6), der einen endlosen flexibles Gurt (51, 161, 162) umfasst, der dazu konfiguriert ist, ein zurückgewiesenes Abgabesystem, das auf dem Transportsystem aufgenommen ist, über einen ersten und eine zweiten Abschnitt des Förderweges in Eingriff zu nehmen, wenn ein zurückgewiesenes Abgabesystem eine Strecke entlang des Förderweges zurücklegt, und ein zurückgewiesenes Abgabesystem auf dem Transportsystem zurückzuhalten; und
erste und zweite Fluidleitungen (171, 172), die dazu konfiguriert sind, einen Gasstrahl in ein erstes Ende (3a) zurückgewiesener Abgabesysteme zu leiten, um eine Substanz aus einem entgegengesetzten Ende (3b) zurückgewiesener Abgabesysteme auszutreiben, während zurückgewiesene Abgabesysteme entlang des Abschnitts des Förderwegs transportiert und durch den Halter auf dem Transportsystem zurückgehalten werden,
wobei die erste Fluidleitung dazu konfiguriert ist, einen Gasstrahl in ein zurückgewiesenes Abgabesystem auf dem ersten Transportelement zu leiten, und die zweite Fluidleitung dazu konfiguriert ist, einen Gasstrahl in ein zurückgewiesenes Abgabesystem auf dem zweiten Transportelement zu leiten,
wobei sich die erste und die zweite Fluidleitung auf gegenüberliegenden Seiten des ersten und des zweiten Transportelements so befinden, dass ein zurückgewiesenes Abgabesystem, das mit seinem ersten Ende in einer ersten Richtung ausgerichtet ist, einem Gasstrahl von der ersten Fluidleitung auf dem ersten Transportelement ausgesetzt wird und ein zurückgewiesenes Abgabesystem, das mit seinem ersten Ende in einer entgegengesetzten zweiten Richtung ausgerichtet ist, einem Gasstrahl von der zweiten Fluidleitung auf dem zweiten Transportelement ausgesetzt wird.

2. Vorrichtung (100) nach Anspruch 1, ferner umfassend ein Zwischentransportelement (155), das sich zwischen dem ersten und dem zweiten Transportelement (151, 152) befindet, wobei das Zwischentransportelement dazu konfiguriert ist, ein zurückgewiesenes Abgabesystem (2), das mit seinem ersten Ende (3a) in einer entgegengesetzten zweiten Richtung ausgerichtet ist, von dem ersten Transportelement an das zweite Transportelement zu übergeben, und optional
wobei sich ein Übergabepunkt (158) zwischen dem Zwischentransportelement und dem ersten Transportelement stromaufwärts der ersten Fluidleitung (171) befindet.

3. Vorrichtung (100) nach Anspruch 1 oder Anspruch 2, ferner umfassend einen Sensor (109), der dazu konfiguriert ist, die Ausrichtung eines zurückgewiesenen Abgabesystems (2) zu bestimmen, und ein Steuergerät (110), das dazu konfiguriert ist, ein zurückgewiesenes Abgabesystem an das zweite Transportelement (152) zu übergeben, wenn ein zurückgewiesenes Abgabesystem mit seinem ersten Ende (3a) in einer entgegengesetzten zweiten Richtung ausgerichtet ist.

4. Vorrichtung (100) nach einem der Ansprüche 1 bis 3, wobei der Halter (6) einen ersten endlosen flexiblen Gurt (161), der dazu konfiguriert ist, ein zurückgewiesenes Abgabesystem (2) auf dem ersten Transportelement (151) über einen ersten Abschnitt des Förderwegs in Eingriff zu nehmen, und einen zweiten endlosen flexiblen Gurt (162), der dazu konfiguriert ist, ein zurückgewiesenes Abgabesystem auf dem zweiten Transportelement (152) über einen zweiten Abschnitt des Förderwegs in Eingriff zu nehmen, umfasst oder
wobei der Halter (6) einen endlosen flexiblen Gurt (51, 161) umfasst, der dazu konfiguriert ist, ein zurückgewiesenes Abgabesystem (2) auf dem ersten Transportelement (151) über einen ersten Abschnitt des Förderweges und auf dem zweiten Transportelement (152) über einen zweiten Abschnitt des Förderweges in Eingriff zu nehmen.

5. Vorrichtung (100) nach einem der vorhergehenden Ansprüche, wobei mindestens ein Transportelement (151, 152) eine Vielzahl von Ausnehmungen (22) umfasst, wobei jede Ausnehmung von benachbarten Ausnehmungen beabstandet ist und sich parallel zueinander erstrecken, wobei jede Ausnehmung dazu konfiguriert ist, ein zurückgewiesenes Abgabesystem (2) zum Fördern entlang des Förderwegs aufzunehmen, und optional
wobei mindestens ein endloser flexibler Gurt (51, 161, 162) dazu konfiguriert ist, ein zurückgewiesenes Abgabesystem in mindestens einer der Vielzahl von Ausnehmungen zurückzuhalten.

6. Vorrichtung (100) nach Anspruch 5, wobei mindestens ein endloser flexibler Gurt (51, 161, 162) dazu konfiguriert ist, sich in einer Richtung entgegengesetzt zu den Transportelementen (151, 152) zu drehen, die der mindestens eine endlose flexible Gurt berührt, sodass sich der mindestens eine endlose flexible Gurt und das Transportelement, mit dem es in Berührung steht, in der gleichen Richtung über mindestens einen von dem ersten und dem zweiten Abschnitt des Förderwegs bewegen, und optional
wobei mindestens ein endloser flexibler Gurt und das mindestens eine Transportelement, mit dem der mindestens eine endlose flexible Gurt in Berührung steht, dazu konfiguriert sind, sich mit der gleichen Geschwindigkeit über mindestens einen des ersten und des zweiten Abschnitts des Förderweges zu bewegen.

7. Vorrichtung (100) nach Anspruch 6, wobei eine Sektion von mindestens einem der endlosen flexiblen Gurte (51, 161, 162) mindestens ein Transportelement (151, 152) berührt, um ein zurückgewiesenes Abgabesystem (2) zumindest teilweise in seine jeweilige Ausnehmung (22) an dem mindestens einen Transportelement zu komprimieren, wenn der mindestens eine endlose flexible Gurt und das mindestens eine Transportelement bewegt werden, und optional
wobei der mindestens eine endlose flexible Gurt aus einem elastisch verformbaren Material gebildet ist, wobei die Sektion des mindestens einen endlosen flexiblen Gurts in Berührung mit mindestens einem Transportelement dazu konfiguriert ist, sich zu verformen, um die Kontur einer Sektion des mindestens einen Transportelements anzunehmen, mit dem der mindestens eine endlose flexible Gurt in Berührung steht, und ein zurückgewiesenes Abgabesystem in seiner jeweiligen Ausnehmung zurückzuhalten.

8. Vorrichtung (100) nach einem der Ansprüche 5 bis 7, wobei jede der Vielzahl von Ausnehmungen (22) ein erstes Ende (22a), das zu einem ersten Rand von mindestens einem Transportelement offen ist, und ein zweites Ende (22b), das zu einem zweiten Rand des mindestens einen Transportelements offen ist, aufweist, und wobei die Vorrichtung mindestens eine Endplatte (29) umfasst, die an dem mindestens einen von dem ersten und dem zweiten Transportelement (151, 152) positioniert ist, um das erste oder das zweite Ende der Ausnehmungen entlang eines Abschnitts des Förderwegs zu schließen.

9. Vorrichtung (100) nach Anspruch 8, wobei mindestens eines der Folgenden gilt:
- ein erstes Ende (22a) der Ausnehmungen (22) auf dem ersten Transportelement (151) ist durch eine erste Endplatte entlang des ersten Abschnitts des Förderwegs geschlossen, und wobei die erste Fluidleitung (171) ein erstes Loch (61) umfasst, das sich durch die erste Endplatte erstreckt, wobei das erste Loch so positioniert ist, dass es mit jeder Ausnehmung in sequentieller Fluidverbindung steht, wenn sich das erste Transportelement (151) bewegt, um ein zurückgewiesenes Abgabesystem (2) entlang des Förderwegs zu fördern,
- ein zweites Ende (22b) der Ausnehmungen auf dem zweiten Transportelement (152) durch eine zweite Endplatte entlang des zweiten Abschnitts des Förderwegs geschlossen ist, und wobei die zweite Fluidleitung (172) ein zweites Loch umfasst, das sich durch die zweite Endplatte erstreckt, wobei das zweite Loch so positioniert ist, dass es mit jeder Ausnehmung in sequentieller Fluidverbindung steht, wenn sich das zweite Transportelement bewegt, um ein zurückgewiesenes Abgabesystem entlang des Förderwegs zu fördern, und
- ferner umfassend eine Vakuumanordnung (30), die ein Saugloch (42) umfasst, das sich durch die Endplatte (29) erstreckt und so positioniert ist, dass es sequentiell mit jeder Ausnehmung (22) kommuniziert, wenn sich das mindestens eine Transportelement (151, 152) bewegt, um ein zurückgewiesenes Abgabesystem (2) entlang des Förderwegs zu fördern, bevor es die Fluidleitung (171, 172) erreicht und in ein zurückgewiesenes Abgabesystem auf dem Transportelement durch den endlosen flexiblen Gurt (51, 616, 162) eingreift, um ein zurückgewiesenes Abgabesystem in einer Längsrichtung so zu ziehen, dass das erste Ende (3a) eines zurückgewiesenen Abgabesystems an der Endplatte positioniert wird.

10. Vorrichtung (100) nach einem der vorhergehenden Ansprüche, wobei ein Sammler (8) angrenzend an das Transportelement (151, 152) positioniert ist, um eine aus einem zurückgewiesenen Abgabesystem ausgetriebene Substanz zu sammeln, und optional
wobei der Sammler (8) dazu konfiguriert ist, eine ausgetriebene Substanz unter Ansaugen zu sammeln, und optional
wobei der Sammler einen Trichter (71) umfasst, der mit einer Leitung (72) und einer Saugpumpe verbunden ist, um eine ausgetriebene Substanz in den Trichter und entlang der Leitung zu saugen, und optional
wobei der erste und der zweite Sammler beide eine ausgetriebene Substanz in die gleiche Sortiersektion (120) zuführen.

11. Vorrichtung (100) nach Anspruch 10, wobei mindestens eines der Folgenden gilt:
die Leitung (72) transportiert eine ausgetriebene Substanz in eine Sortiersektion (120), die dazu konfiguriert ist, eine ausgetriebene Substanz von Verunreinigungen zu trennen, und
der Sammler (8) umfasst einen ersten Sammler (181), der an einem zweiten Ende des ersten Transportelements (151) positioniert ist, und einen zweiten Sammler (182), der an einer ersten Seite des zweiten Transportelements (152) positioniert ist.

12. Vorrichtung (100) nach einem der vorhergehenden Ansprüche, ferner umfassend einen Bunker (4), der dazu konfiguriert ist, ein zurückgewiesenes Abgabesystem aufzunehmen und ein zurückgewiesenes Abgabesystem auf das Transportelement zuzuführen, und optional
ferner umfassend eine Drehzuführung (111), die dazu konfiguriert ist, ein zurückgewiesenes Abgabesystem von einem Förderer für zurückgewiesene Abgabesysteme aufzunehmen und ein zurückgewiesenes Abgabesystem dem Bunker zuzuführen.

13. Vorrichtung nach einem der Ansprüche 9 bis 12,
wobei ein zurückgewiesenes Abgabesystem unter Vakuum in jede Ausnehmung im Transportelement gesaugt wird, und optional
wobei ein zurückgewiesenes Abgabesystem sowohl durch Vakuum als auch durch den endlosen flexiblen Gurt in einer Ausnehmung zurückgehalten wird.

14. Abgabesystem-Herstellungssystem, einschließlich einer Inspektionsstation und einen Zurückweisungsweg für Abgabesysteme, die von der Inspektionsstation zurückgewiesen werden, und die Vorrichtung (100) nach einem der vorhergehenden Ansprüche, die positioniert ist, um zurückgewiesene Abgabesysteme (2), die entlang des Zurückweisungswegs befördert werden, aufzunehmen.

15. Verfahren zum Extrahieren einer Substanz aus einem zurückgewiesenen Abgabesystem (2), wobei das Verfahren Folgendes umfasst:
Zuführen eines zurückgewiesenen Abgabesystems auf ein erstes Transportelement (151) und Fördern des zurückgewiesenen Abgabesystems entlang eines Förderwegs in einer Richtung senkrecht zur Längsachse des zurückgewiesenen Abgabesystems;
in Eingriff Bringen des zurückgewiesenen Abgabesystems, das auf dem ersten Transportelement aufgenommen ist, mit einem endlosen flexiblen Gurt (51, 161), um das zurückgewiesene Abgabesystem auf dem ersten Transportelement zurückzuhalten;
Leiten eines Gasstrahls in ein erstes Ende (3a) des zurückgewiesenen Abgabesystems, das entlang des Förderwegs gefördert wird, das sich in einer ersten Ausrichtung befindet, und das durch den endlosen flexiblen Gurt auf dem ersten Transportelement zurückgehalten wird, um eine Substanz aus einem entgegengesetzten Ende des zurückgewiesenen Abgabesystems auszutreiben, und
Übergeben zurückgewiesener Abgabesysteme, die auf dem ersten Transportelement aufgenommen sind, in einer zweiten Ausrichtung an ein zweites Transportelement (152),
in Eingriff Bringen des zurückgewiesenen Abgabesystems, das auf dem zweiten Transportelement aufgenommen ist, mit einem endlosen flexiblen Gurt (51, 162), um das zurückgewiesene Abgabesystem auf dem zweiten Transportelement zurückzuhalten;
Leiten eines Gasstrahls in ein erstes Ende (3a) des zurückgewiesenen Abgabesystems, das entlang des Förderwegs gefördert wird, das sich in der zweiten Ausrichtung befindet, und das durch den endlosen flexiblen Gurt auf dem zweiten Transportelement zurückgehalten wird, um eine Substanz aus einem entgegengesetzten Ende des zurückgewiesenen Abgabesystems auszutreiben.

## Revendications

1. Appareil (100) destiné à récupérer une substance de systèmes de distribution rejetés, l'appareil comprenant :
un système de transport (5) conçu pour recevoir un système de distribution rejeté (2) et le transporter le long d'une voie de transport dans une direction perpendiculaire à un axe longitudinal d'un système de distribution rejeté, le système de transport comprenant un premier élément de transport (151) et un second élément de transport (152) ;
au moins un dispositif de retenue (6) comprenant une courroie souple sans fin (51, 161, 162) conçue pour venir en prise avec un système de distribution rejeté reçu sur le système de transport sur des première et seconde parties de la voie de transport tandis qu'un système de distribution rejeté se déplace le long de la voie de transport et pour retenir un système de distribution rejeté sur le système de transport ; et
des premier et second conduits de fluide (171, 172) conçus pour diriger un jet de gaz dans une première extrémité (3a) des systèmes de distribution rejetés pour expulser une substance d'une extrémité opposée (3b) des systèmes de distribution rejetés, pendant que des systèmes de distribution rejetés sont transportés le long de ladite partie de la voie de transport et retenus sur le système de transport par le dispositif de retenue,
ledit premier conduit de fluide étant conçu pour diriger un jet de gaz vers un système de distribution rejeté sur le premier élément de transport et ledit second conduit de fluide étant conçu pour diriger un jet de gaz vers un système de distribution rejeté sur le second élément de transport,
lesdits premier et second conduits de fluide étant sur des côtés opposés des premier et second éléments de transport de sorte qu'un système de distribution rejeté orienté avec sa première extrémité dans une première direction soit soumis à un jet de gaz provenant du premier conduit de fluide sur le premier élément de transport et un système de distribution rejeté orienté avec sa première extrémité dans une seconde direction opposée soit soumis à un jet de gaz provenant du second conduit de fluide sur le second élément de transport.

2. Appareil (100) selon la revendication 1, comprenant en outre un élément de transport intermédiaire (155) situé entre les premier et second éléments de transport (151, 152), l'élément de transport intermédiaire étant conçu pour transférer un système de distribution rejeté (2) orienté avec sa première extrémité (3a) dans une seconde direction opposée du premier élément de transport au second élément de transport, et éventuellement,
un point de transfert (158) entre l'élément de transport intermédiaire et le premier élément de transport étant situé en amont du premier conduit de fluide (171).

3. Appareil (100) selon la revendication 1 ou la revendication 2, comprenant en outre un capteur (109) conçu pour déterminer l'orientation d'un système de distribution rejeté (2), et un dispositif de commande (110) conçu pour transférer un système de distribution rejeté au second élément de transport (152) lorsqu'un système de distribution rejeté est orienté avec sa première extrémité (3a) dans une seconde direction opposée.

4. Appareil (100) selon l'une quelconque des revendications 1 à 3, ledit dispositif de retenue (6) comprenant une première courroie souple sans fin (161) conçue pour venir en prise avec un système de distribution rejeté (2) sur le premier élément de transport (151) sur une première partie de la voie de transport, et une seconde courroie souple sans fin (162) conçue pour venir en prise avec un système de distribution rejeté sur le second élément de transport (152) sur une seconde partie de la voie de transport, ou
ledit dispositif de retenue (6) comprenant une courroie souple sans fin (51, 161) conçue pour venir en prise avec un système de distribution rejeté (2) sur le premier élément de transport (151) sur une première partie de la voie de transport et sur le second élément de transport (152) sur une seconde partie de la voie de transport.

5. Appareil (100) selon l'une quelconque des revendications précédentes, au moins un élément de transport (151, 152) comprenant une pluralité d'évidements (22), chaque évidement étant espacé des évidements adjacents et s'étendant parallèlement les uns aux autres, chaque évidement étant conçu pour recevoir un système de distribution rejeté (2) en vue du transport le long de la voie de transport, et éventuellement,
au moins une courroie souple sans fin (51, 161, 162) étant conçue pour retenir un système de distribution rejeté dans au moins un de la pluralité d'évidements.

6. Appareil (100) selon la revendication 5, au moins une courroie souple sans fin (51, 161, 162) étant conçue pour tourner dans une direction opposée aux éléments de transport (151, 152) en contact avec la au moins une courroie souple sans fin, de sorte que la au moins une courroie souple sans fin et l'élément de transport avec lequel elle est en contact se déplacent dans la même direction sur au moins l'une desdites première et seconde parties de la voie de transport, et éventuellement,
au moins une courroie souple sans fin et ledit au moins un élément de transport avec lequel la au moins une courroie souple sans fin est en contact étant conçus pour se déplacer à la même vitesse sur au moins l'une desdites première et seconde parties de la voie de transport.

7. Appareil (100) selon la revendication 6, une section d'au moins l'une des courroies souples sans fin (51, 161, 162) entrant en contact avec au moins un élément de transport (151, 152) pour comprimer au moins partiellement un système de distribution rejeté (2) dans son évidement respectif (22) sur l'au moins un élément de transport lorsque la au moins une courroie souple sans fin et l'au moins un élément de transport sont déplacés, et éventuellement,
ladite au moins une courroie souple sans fin étant formée à partir d'un matériau élastiquement déformable, ladite section de la au moins une courroie souple sans fin en contact avec au moins un élément de transport étant conçue pour se déformer afin d'épouser le contour d'une section de l'au moins un élément de transport avec lequel la au moins une courroie souple sans fin est en contact et retenir un système de distribution rejeté dans son évidement respectif.

8. Appareil (100) selon l'une quelconque de la revendication 5 à la revendication 7, chacun de la pluralité d'évidements (22) comportant une première extrémité (22a) qui est ouverte sur un premier bord d'au moins un élément de transport et une seconde extrémité (22b) qui est ouverte sur un second bord de l'au moins un élément de transport, et ledit appareil comprenant au moins une plaque d'extrémité (29) positionnée contre l'au moins un des premier et second éléments de transport (151, 152) pour fermer la première ou la seconde extrémité des évidements le long d'une partie de la voie de transport.

9. Appareil (100) selon la revendication 8, au moins l'un des suivants :
- une première extrémité (22a) des évidements (22) sur le premier élément de transport (151) étant fermée par une première plaque d'extrémité le long de ladite première partie de la voie de transport, et ledit premier conduit de fluide (171) comprenant un premier trou (61) s'étendant à travers la première plaque d'extrémité, le premier trou étant positionné pour être en communication fluidique séquentielle avec chaque évidement tandis que le premier élément de transport (151) se déplace pour transporter un système de distribution rejeté (2) le long de la voie de transport,
- une seconde extrémité (22b) des évidements sur le second élément de transport (152) étant fermée par une seconde plaque d'extrémité le long de ladite seconde partie de la voie de transport, et ledit second conduit de fluide (172) comprenant un second trou s'étendant à travers la seconde plaque d'extrémité, ledit second trou étant positionné pour être en communication fluidique séquentielle avec chaque évidement tandis que le second élément de transport se déplace pour transporter un système de distribution rejeté le long de la voie de transport, et
- comprenant en outre un agencement de vide (30) comprenant un trou d'aspiration (42) s'étendant à travers la plaque d'extrémité (29) et positionné pour communiquer séquentiellement avec chaque évidement (22) tandis que l'au moins un élément de transport (151, 152) se déplace pour transporter un système de distribution rejeté (2) le long de la voie de transport, avant d'atteindre le conduit de fluide (171, 172) et la mise en prise avec un système de distribution rejeté sur l'élément de transport par la courroie souple sans fin (51, 616, 162), pour tirer un système de distribution rejeté dans une direction longitudinale de sorte que la première extrémité (3a) d'un système de distribution rejeté soit positionnée contre la plaque d'extrémité.

10. Appareil (100) selon l'une quelconque des revendications précédentes, un collecteur (8) étant positionné de manière adjacente à l'élément de transport (151, 152) pour collecter une substance expulsée d'un système de distribution rejeté, et éventuellement,
ledit collecteur (8) étant conçu pour collecter une substance expulsée sous l'effet d'une aspiration, et éventuellement,
ledit collecteur comprenant un entonnoir (71) relié à un conduit (72) et une pompe d'aspiration pour attirer une substance expulsée dans l'entonnoir et le long du conduit, et éventuellement,
lesdits premier et second collecteurs introduisant tous deux une substance expulsée dans la même section de tri (120).

11. Appareil (100) selon la revendication 10, au moins l'un des suivants :
ledit conduit (72) transportant une substance expulsée dans une section de tri (120) conçue pour séparer une substance expulsée des contaminants, et
ledit collecteur (8) comprenant un premier collecteur (181) positionné sur une seconde extrémité du premier élément de transport (151) et un second collecteur (182) positionné sur un premier côté du second élément de transport (152).

12. Appareil (100) selon l'une quelconque des revendications précédentes, comprenant en outre une trémie (4) conçue pour recevoir un système de distribution rejeté et introduire un système de distribution rejeté sur l'élément de transport et éventuellement,
comprenant en outre un dispositif d'alimentation rotatif (111) conçu pour recevoir un système de distribution rejeté à partir d'un transporteur de système de distribution rejeté et pour introduire un système de distribution rejeté dans la trémie.

13. Appareil selon l'une quelconque de la revendication 9 à la revendication 12,
un système de distribution rejeté étant attiré dans chaque évidement de l'élément de transport sous vide, et éventuellement,
un système de distribution rejeté étant retenu dans un évidement à la fois par le vide et par la courroie souple sans fin.

14. Système de fabrication de système de distribution comprenant une station d'inspection et une voie de rejet pour des systèmes de distribution rejetés par la station d'inspection, et l'appareil (100) selon l'une quelconque des revendications précédentes positionné pour recevoir les systèmes de distribution rejetés (2) transportés le long de la voie de rejet.

15. Procédé d'extraction d'une substance à partir d'un système de distribution rejeté (2), le procédé comprenant :
l'introduction d'un système de distribution rejeté sur un premier élément de transport (151) et le transport du système de distribution rejeté le long d'une voie de transport dans une direction perpendiculaire à l'axe longitudinal du système de distribution rejeté ;
la mise en prise du système de distribution rejeté reçu sur le premier élément de transport avec une courroie souple sans fin (51, 161) pour retenir le système de distribution rejeté sur le premier élément de transport ;
la direction d'un jet de gaz vers une première extrémité (3a) du système de distribution rejeté transporté le long de la voie de transport qui est dans une première orientation, et qui est retenu sur le premier élément de transport par la courroie souple sans fin, pour expulser une substance d'une extrémité opposée du système de distribution rejeté, et
le transfert de systèmes de distribution rejetés reçus sur le premier élément de transport dans une seconde orientation vers un second élément de transport (152),
la mise en prise du système de distribution rejeté reçu sur le second élément de transport avec une courroie souple sans fin (51, 162) pour retenir le système de distribution rejeté sur le second élément de transport ;
la direction d'un jet de gaz vers une première extrémité (3a) du système de distribution rejeté transporté le long de la voie de transport qui est dans la seconde orientation, et qui est retenu sur le second élément de transport par la courroie souple sans fin, pour expulser une substance d'une extrémité opposée du système de distribution rejeté.
